# EUROPÄISCHE PATENTSCHRIFT

(11) **EP 3 145 656 B1**
(45) Veröffentlichungstag und Bekanntmachung des Hinweises auf die Patenterteilung: **14.03.2018**
(21) Anmeldenummer: 15718905.1
(22) Anmeldetag: 29.04.2015
(51) Int. Cl.: B21D 45/02, B21D 28/06, B21D 43/28

(54) **VORRICHTUNG UND VERFAHREN ZUM GEGENSEITIGEN TRENNEN ZWEIER WERKSTÜCKTEILE EINES PLATTENARTIGEN WERKSTÜCKS**
DEVICE AND METHOD FOR SEPARATING TWO WORKPIECE PARTS OF A SHEET-LIKE WORKPIECE FROM ONE ANOTHER
DISPOSITIF POUR SÉPARER L'UN DE L'AUTRE DEUX ÉLÉMENTS D'UNE PIÈCE EN FORME DE PLAQUE

(30) Priorität: 22.05.2014 DE 102014209811
(43) Veröffentlichungstag der Anmeldung: 29.03.2017
(73) Patentinhaber: Trumpf Werkzeugmaschinen GmbH + Co. KG, 71254 Ditzingen (DE); J. Schmalz GmbH, 72293 Glatten (DE)
(72) Erfinder: PROKOP, Heinz-Jürgen, 45134 Essen (DE); EPPERLEIN, Peter, 71229 Leonberg (DE); EISELE, Thomas, 72275 Alpirsbach-Peterzell (DE); DUNKMANN, Walter, 76530 Baden-Baden (DE); DEISS, Magnus, 70372 Stuttgart (DE); SCHMAUDER, Frank, 72555 Metzingen (DE)
(74) Vertreter: Kohler Schmid Möbus Patentanwälte
(86) Internationale Anmeldenummer: PCT/EP2015/059314
(87) Internationale Veröffentlichungsnummer: WO 2015/176931

(56) Entgegenhaltungen:
- EP-A1- 0 767 018
- EP-A1- 2 177 293
- WO-A1-2014/023323
- JP-A- H04 187 333
- JP-A- 2009 202 330

## Beschreibung

Die Erfindung betrifft eine Vorrichtung zum gegenseitigen Trennen zweier Werkstückteile eines plattenartigen Werkstücks, insbesondere eines Blechs,
- mit einer Werkstücklagerung, welche eine Lagerungsebene definiert und welche bei Lagerung der beiden voneinander zu trennenden Werkstückteile diese mit gegenseitiger Überdeckung senkrecht zu der Lagerungsebene lagert,
- mit einer Aushebevorrichtung, welche an einer Seite der Lagerungsebene angeordnet ist und mittels derer eines der voneinander zu trennenden Werkstückteile als Entnahmeteil senkrecht zu der Lagerungsebene in einer Ausheberichtung beaufschlagbar ist sowie
- mit einem Gegenhalter, welcher an einer der Seite der Aushebevorrichtung gegenüberliegenden Seite der Lagerungsebene angeordnet und zur in der Ausheberichtung wirksamen Abstützung des durch die Aushebevorrichtung beaufschlagten Entnahmeteils vorgesehen ist und welcher in einen Fixierungszustand und in einen Freigabezustand überführbar ist,
wobei das einerseits durch die Aushebevorrichtung beaufschlagte und andererseits durch den Gegenhalter abgestützte Entnahmeteil bei Fixierungszustand des Gegenhalters an diesem fixiert und bei Freigabezustand des Gegenhalters von diesem gelöst ist und mittels der Aushebevorrichtung senkrecht zu der Lagerungsebene relativ zu dem als Restteil vorgesehenen anderen Werkstückteil mit einer Entnahmebewegung in der Ausheberichtung bewegbar und dadurch von dem Restteil trennbar ist.

Die Erfindung betrifft des Weiteren eine mit einer Vorrichtung der eingangs genannten Art versehene maschinelle Anordnung zum trennenden Bearbeiten von plattenartigen Werkstücken, insbesondere von Blechen.

Außerdem betrifft die Erfindung ein Verfahren zum gegenseitigen Trennen zweier Werkstückteile eines plattenartigen Werkstücks, insbesondere eines Blechs,
- wobei die beiden voneinander zu trennenden Werkstückteile mittels einer Werkstücklagerung mit gegenseitiger Überdeckung senkrecht zu einer von der Werkstücklagerung definierten Lagerungsebene gelagert werden,
- wobei eines der voneinander zu trennenden Werkstückteile als Entnahmeteil vorgesehen ist und durch eine Aushebevorrichtung, welche an einer Seite der Lagerungsebene angeordnet ist, senkrecht zu der Lagerungsebene in einer Ausheberichtung beaufschlagt wird,
- wobei das durch die Aushebevorrichtung in der Ausheberichtung beaufschlagte Entnahmeteil durch einen in einen Fixierungszustand und in einen Freigabezustand überführbaren Gegenhalter in der Ausheberichtung abgestützt wird, welcher an einer der Seite der Aushebevorrichtung gegenüberliegenden Seite der Lagerungsebene angeordnet ist und
- wobei das einerseits durch die Aushebevorrichtung beaufschlagte und andererseits durch den Gegenhalter abgestützte Entnahmeteil durch die Aushebevorrichtung senkrecht zu der Lagerungsebene relativ zu dem als Restteil vorgesehenen anderen Werkstückteil mit einer Entnahmebewegung in der Ausheberichtung bewegt und dadurch von dem Restteil getrennt wird und bei Fixierungszustand des Gegenhalters von diesem fixiert wird und bei Freigabezustand des Gegenhalters von diesem gelöst ist.

Die Erfindung betrifft schließlich ein maschinelles Fertigungsverfahren, im Rahmen dessen das vorstehende Verfahren zum gegenseitigen Trennen zweier Werkstückteile eines plattenartigen Werkstücks durchgeführt wird.

Das manuelle und insbesondere auch das automatisierte Entnehmen eines beim trennenden Bearbeiten von Werkstücken, etwa beim Stanzen oder (Laser-) Schneiden von Blechen, erzeugten Werkstückteils aus dem Restwerkstück gestaltet sich schwierig, da sich das Werkstückteil und das Restwerkstück in der Regel in einer gemeinsamen, durch eine Werkstücklagerung definierten Ebene befinden und nur durch einen schmalen Trennspalt voneinander getrennt sind. Das Werkstückteil und das Restwerkstück liegen auf einer Höhe und überdecken einander dementsprechend senkrecht zu der von der Werkstücklagerung definierten Ebene. Beim Entladen des Werkstückteils kann sich dieses insbesondere an dem Restwerkstück verkanten. Die mögliche Folge sind Produktionsunterbrechungen aber auch Beschädigungen des zu entnehmenden Werkstückteils und gegebenenfalls auch der zum Entnehmen des Werkstückteils eingesetzten Vorrichtung.

Maßnahmen zur Gewährleistung einer möglichst hohen Prozesssicherheit beim automatisierten Entnehmen eines Werkstückteils aus einem Restwerkstück sind aus dem gattungsbildenden Stand der Technik gemäß EP 2 177 293 A1 bekannt. Im Falle des Standes der Technik ruht ein Werkstückteil gemeinsam mit einem bei der vorausgegangenen Werkstückbearbeitung gleichfalls erzeugten Restwerkstück auf einer Werkstückauflage einer Werkzeugmaschine. Eine Vorrichtung zum gegenseitigen Trennen des Werkstückteils und des Restwerkstücks umfasst ein höhenverstellbares Auflageelement, das an der Unterseite des Werkstückteils angeordnet ist sowie einen als Gegenhalter dienenden Sauggreifer an der Oberseite des Werkstückteils. Zum Entnehmen des Werkstückteils aus dem Restwerkstück wird zunächst der Sauggreifer auf das Werkstückteil aufgesetzt. Anschließend wird an den Sauggreifer ein Unterdruck angelegt. Dadurch wird der Sauggreifer aus dem anfänglichen Freigabezustand in den Fixierungszustand überführt und der Sauggreifer saugt das Werkstückteil an. Nach dem Ansaugen des Werkstückteils durch den Sauggreifer wird das Auflageelement an der Unterseite des Werkstückteils angehoben und synchron mit dem weiterhin im Fixierungszustand befindlichen Sauggreifer und dem zwischen dem Auflageelement und dem Sauggreifer geklemmten Werkstückteil in Hubrichtung bewegt. Dadurch wird das zwischen dem Auflageelement und dem Sauggreifer geklemmte Werkstückteil aus dem Restwerkstück ausgehoben. Abschließend wird das Auflageelement in seine Ausgangsposition abgesenkt und der Sauggreifer verfährt mit dem nun an dem Sauggreifer fixierten Werkstückteil zu einem Magazin, in welchem er das Werkstückteil ablegt.

Im Falle des Standes der Technik darf der an das Werkstückteil angelegte Sauggreifer nicht seitlich gegenüber dem Werkstückteil vorstehen, da andernfalls aufgrund des an den Sauggreifer angelegten Unterdrucks das Restwerkstück, welches das Werkstückteil umgibt, mit angesaugt wird, was wiederum eine Entnahme des Werkstückteils erschwert oder unmöglich macht. Dementsprechend muss der vorbekannte Sauggreifer eine an das anzusaugende Werkstückteil angepasste Ausdehnung aufweisen und außerdem gegenüber dem Werkstückteil derart positioniert werden, dass ein seitlicher Überstand des Sauggreifers gegenüber dem Werkstückteil vermieden wird.

Den Stand der Technik dahingehend weiterzubilden, dass sich die Prozesssicherheit beim gegenseitigen Trennen von Werkstückteilen und Restwerkstücken weiter erhöht, ist Aufgabe der vorliegenden Erfindung.

Erfindungsgemäß gelöst wird diese Aufgabe durch die Vorrichtung gemäß Anspruch 1 und durch das Verfahren gemäß Anspruch 23. Anspruch 17 betrifft eine maschinelle Anordnung mit der Vorrichtung gemäß der vorliegenden Erfindung. Anspruch 25 betrifft ein Verfahren, in welchem das Verfahren gemäß der vorliegenden Erfindung verwendet wird. Im Falle der Erfindung bildet der wahlweise in den Freigabezustand oder den Fixierungszustand schaltbare Gegenhalter zumindest im Freigabezustand eine in der Ausheberichtung starre Anlage für das von dem Restteil zu trennende Entnahmeteil aus. Erfindungsgemäß bedarf es dementsprechend keiner Überführung des Gegenhalters in den Fixierungszustand, damit das von der Aushebevorrichtung in der Ausheberichtung beaufschlagte Entnahmeteil parallel zu dem Restteil ausgerichtet und dadurch gegen ein den Trennprozess beeinträchtigendes Verkanten und/oder gegen eine den Trennprozess beeinträchtigende Verformung gesichert ist.

Die Ausrichtung der Lagerungsebene der Werkstücklagerung erfindungsgemäßer Vorrichtungen und somit auch der Verlauf der Ausheberichtung sind beliebig. So kann die Werkstücklagerung die voneinander zu trennenden Werkstückteile beispielsweise horizontal aber auch vertikal ausrichten. In dem erstgenannten Fall trennt die Aushebevorrichtung das Entnahmeteil von dem Restteil mit einer Entnahmebewegung nach oben oder nach unten, im zweitgenannten Fall mit einer Entnahmebewegung nach rechts oder nach links. Bevorzugt werden geradlinige Entnahmebewegungen senkrecht zu der von der Werkstücklagerung definierten Lagerungsebene.

Die Fixierungsfunktion des Gegenhalters wird genutzt, um das Entnahmeteil nach dem Trennen von dem Restteil aus dem Nahbereich des Restteils abzuführen. Ist das Entnahmeteil mittels der Aushebevorrichtung mit einer vertikal nach oben gerichteten oder mit einer horizontalen Entnahmebewegung von dem Restteil getrennt worden und ist der Gegenhalter in den Fixierungszustand überführt, so ist das Entnahmeteil gegen die Wirkung der Schwerkraft an dem Gegenhalter festgelegt. Die Aushebevorrichtung kann folglich von dem an dem Gegenhalter fixierten Entnahmeteil entfernt und in ihre Ausgangsposition zurückbewegt werden. Mit Hilfe des Gegenhalters lässt sich das daran fixierte Entnahmeteil schließlich von der Werkstücklagerung und damit gegebenenfalls aus dem Arbeitsbereich der zur Erzeugung des Entnahmeteils und des Restteils eingesetzten maschinellen Anordnung abführen.

In ihrer Beschaffenheit kann die von dem Gegenhalter ausgebildete starre Anlage auf das abzustützende Entnahmeteil abgestimmt sein. Insbesondere kann die starre Anlage einen Reibbelag aufweisen, der verhindert, dass das an der starren Anlage abgestützte Entnahmeteil unerwünschterweise verrutscht. Als starre Anlage in Frage kommt beispielsweise eine flächige einteilige Anlage aber auch eine Anlage, die von mehreren Anlageelementen gebildet wird. Sind Anlageelemente relativ zueinander positionierbar, kann die starre Anlage an wechselnde Geometrien der abzustützenden Werkstückteile angepasst werden. Starre Anlagen mit einer planen Anlagefläche sind ebenso denkbar wie starre Anlagen mit unregelmäßig geformten dreidimensionalen Anlageflächen.

Besondere Ausführungsarten der in den unabhängigen Patentansprüchen beschriebenen Erfindung ergeben sich aus den abhängigen Patentansprüchen 2 bis 16, 18 bis 22, 24 und 26 bis 29.

Gemäß den Patentansprüchen 2 und 24 ist der Gegenhalter, welcher das Entnahmeteil an der von der Aushebevorrichtung abliegenden Seite abstützt, zu Beginn der Entnahmebewegung in den Freigabezustand geschaltet. Die Fixierungsfunktion des Gegenhalters ist dementsprechend zu einem Zeitpunkt deaktiviert, zu welchem sich der an das Entnahmeteil angelegte Gegenhalter in unmittelbarer Nähe des dem Entnahmeteil benachbarten Restwerkstücks befindet. Aktiviert wird die Fixierungsfunktion des Gegenhalters erst dann, wenn der Gegenhalter zumindest einen Teil der Entnahmebewegung zurückgelegt hat und infolgedessen derart weit von dem Restteil beabstandet ist, dass aufgrund der Überführung des Gegenhalters in den Fixierungszustand lediglich das Entnahmeteil und nicht auch das Restteil an dem Gegenhalter festgelegt wird.

Das beanspruchte Erfindungsmerkmal ist insbesondere für Anwendungsfälle von Bedeutung, in denen der Gegenhalter aufgrund seiner eigenen Abmessungen und aufgrund der Abmessungen des auszuhebenden Entnahmeteils zu Beginn der Entnahmebewegung nicht nur über dem Entnahmeteil sondern auch über dem Restteil liegt. Würde in derartigen Fällen die Fixierungsfunktion des Gegenhalters bereits zu Beginn der Entnahmebewegung aktiviert, so würde der Gegenhalter bei der anschließenden Bewegung nicht nur das Entnahmeteil sondern unerwünschterweise auch das Restteil mitnehmen. Eine massive Störung des Prozessablaufs wäre die Folge. Erfindungsgemäß entfällt die Notwendigkeit, die Größe des Gegenhalters derart zu wählen, dass sie die Größe des abzustützenden Entnahmeteils nicht übersteigt.

Unabhängig von seinem momentanen Funktionszustand bildet der Gegenhalter erfindungsgemäß eine in der Ausheberichtung starre Anlage für das von der Aushebevorrichtung in der Ausheberichtung beaufschlagte Entnahmeteil aus. Während der gesamten Entnahmebewegung sorgt die starre Anlage an dem Gegenhalter für eine zu der Lagerungsebene parallele Ausrichtung des Entnahmeteils. Infolgedessen sind während der gesamten Entnahmebewegung ein Verkippen und eine Verformung des Entnahmeteils und eine damit verbundenen Beeinträchtigung des Trennprozesses ausgeschlossen.

Einen hinreichenden Abstand von dem Restteil kann der Gegenhalter bereits nach einem Teil der Entnahmebewegung, unter Umständen aber auch erst dann aufweisen, wenn das Entnahmeteil vollständig von dem Restteil getrennt ist, das Entnahmeteil und das Restteil einander also nicht mehr in der Ausheberichtung überdecken.

Im Interesse maximaler Prozesssicherheit ist in bevorzugter Ausgestaltung des erfindungsgemäßen Verfahrens vorgesehen, dass der Gegenhalter erst nach der Beendigung der Entnahmebewegung in den Fixierungszustand überführt wird.

Ausweislich Patentanspruch 3 ist die von dem Gegenhalter ausgebildete starre Anlage für das Entnahmeteil in bevorzugter Ausgestaltung der Erfindung gleichzeitig als eine in einen Funktionszustand und in einen Außerfunktionszustand schaltbare Halteeinrichtung vorgesehen. Im Funktionszustand ermöglicht die Halteeinrichtung die Fixierung des Entnahmeteils an dem Gegenhalter. Bei Außerfunktionszustand der Halteeinrichtung ist das Entnahmeteil von dem Gegenhalter gelöst. Eine Doppelfunktion der beschriebenen Art als starre Anlage und als aktivierbare und deaktivierbare Halteeinrichtung für das Entnahmeteil können beispielsweise elektrostatische Greifer, Elektromagnete oder an eine Unterdruckquelle anlegbare Sinterschwämme übernehmen.

Als weitere Erfindungsbauart sieht Patentanspruch 4 eine Vorrichtung vor, die eine oder mehrere Halteeinrichtungen zusätzlich zu der starren Anlage für das Entnahmeteil aufweist. Als derartige separate Halteeinrichtungen kommen außer den vorstehenden Einrichtungsbauarten beispielsweise auch herkömmliche Sauggreifer in Frage, die mit elastisch verformbaren Saugermanschetten an dem Entnahmeteil angelegt werden.

In Weiterbildung der Erfindungsbauart nach Patentanspruch 4 ist ausweislich Patentanspruch 5 vorgesehen, dass der Gegenhalter die starre Anlage für das Entnahmeteil durch einen in der Ausheberichtung starren Stützkörper ausbildet und dass die zusätzlich zu der starren Anlage vorgesehene Halteeinrichtung des Gegenhalters relativ zu dem Stützkörper in der Ausheberichtung und in Gegenrichtung der Ausheberichtung beweglich ist. Aufgrund ihrer Beweglichkeit nimmt die Halteeinrichtung bei einerseits durch die Aushebevorrichtung beaufschlagtem und andererseits durch den Gegenhalter abgestütztem Entnahmeteil relativ zu dem Stützkörper eine Position ein, in welcher sie das Entnahmeteil fixieren kann ohne die Stützwirkung des Stützkörpers zu beeinträchtigen. Ist beispielsweise die Fläche des Entnahmeteils, an welcher der Gegenhalter das Entnahmeteil abstützt, nicht ideal eben, so kann sich die Halteeinrichtung aufgrund ihrer Beweglichkeit an den Verlauf der betreffenden Fläche des Entnahmeteils anpassen und sich relativ zu dem an dem Entnahmeteil anliegenden Stützkörper in eine Position bewegen, in welcher sie ungeachtet der Unebenheit des Entnahmeteils in der Lage ist, das an dem Stützkörper in der Ausheberichtung starr abgestützte Entnahmeteil zu fixieren.

Vorzugsweise sind als starrer Stützkörper des Gegenhalters eine formstabile Anlageplatte und als Halteeinrichtungen Sauggreifer mit federelastischen Saugermanschetten vorgesehen, die in Bohrungen der formstabilen Anlageplatte untergebracht sind. Ist der Gegenhalter von dem zugeordneten Entnahmeteil beabstandet, so stehen die Saugermanschetten gegenüber der formstabilen Anlageplatte vor. Wird die formstabile Anlageplatte vor Beginn der Entnahmebewegung auf das Entnahmeteil aufgesetzt, so können die Saugermanschetten im Kontakt mit dem Entnahmeteil in das Innere der Bohrungen der formstabilen Anlageplatte zurückweichen. Während der Entnahmebewegung stützt dann die formstabile Anlageplatte das von der Aushebevorrichtung beaufschlagte Entnahmeteil ohne Beeinträchtigung durch die Saugermanschetten mit einer zu der Lagerungsebene parallelen Ausrichtung ab. Gleichzeitig liegen die Sauggreifer mit den Saugermanschetten an der Oberfläche des Entnahmeteils an. Werden die Sauggreifer nach einem Teil der Entnahmebewegung oder nach Beendigung der Entnahmebewegung aktiviert, so kann sich an den Sauggreifern die zur Fixierung des Entnahmeteils erforderliche Haltekraft funktionssicher aufbauen.

Besteht die in weiterer Ausgestaltung der Erfindung vorgesehene Möglichkeit, den Stützkörper durch eine Relativbewegung des Stützkörpers und der Halteeinrichtung in eine Position zu bewegen, in welcher der Stützkörper gegenüber der Halteeinrichtung in Gegenrichtung der Ausheberichtung versetzt ist (Patentanspruch 6), so kann der Stützkörper erforderlichenfalls auch dazu genutzt werden, das von dem Restteil getrennte Entnahmeteil von der Halteeinrichtung zu lösen beziehungsweise das Lösen des Entnahmeteils von der Halteeinrichtung zu unterstützen. Durch eine Bewegung des Stützkörpers in Gegenrichtung der Ausheberichtung lässt sich das Entnahmeteil von der Halteeinrichtung wegdrücken. Alternativ sind auch eigens hierfür vorgesehene Abdrückelemente an dem Gegenhalter denkbar.

Die Erfindungsbauart gemäß Patentanspruch 7 zeichnet sich dadurch aus, dass die Abstützung des Entnahmeteils durch den Gegenhalter eine breite Basis besitzt. Entsprechend funktionssicher ist das Entnahmeteil parallel zu der Lagerungsebene ausgerichtet.

In weiterer bevorzugter Ausgestaltung der Erfindung ist ausweislich Patentanspruch 8 vorgesehen, dass die Aushebevorrichtung vor Beginn der Entnahmebewegung zunächst das von dem Restteil zu trennende Entnahmeteil mit einer Stellbewegung anfahren kann. Es ist dementsprechend nicht erforderlich, dass die Aushebevorrichtung eine Größe besitzt, aufgrund derer sie den gesamten Bereich abdeckt, in welchem an einem bearbeiteten Werkstück voneinander zu trennende Werkstückteile angeordnet sein können. Es reicht vielmehr eine verhältnismäßig klein bauende Aushebevorrichtung aus, die nach Art eines Shuttles gezielt in diejenigen Positionen bewegt wird, in welchen von der Aushebevorrichtung Entnahmeteile in der Ausheberichtung zu beaufschlagen und zu bewegen sind.

Patentanspruch 9 betrifft eine Erfindungsbauart, im Falle derer die Stellbewegung der Aushebevorrichtung in Abhängigkeit von der Beschaffenheit des Entnahmeteils gesteuert wird. Etwa in Abhängigkeit von der Eigensteifigkeit, der Form und/oder der Ausdehnung des betreffenden Entnahmeteils ist die Aushebevorrichtung mehr oder weniger exakt gegenüber dem Entnahmeteil zu positionieren, wenn dieses mittels einer Werkstücklagerung horizontal ausgerichtet und durch die Aushebevorrichtung beaufschlagt und bewegt wird. Die Aushebevorrichtung muss auf das Entnahmeteil derart einwirken, dass ein Verkanten des Entnahmeteils im Restteil verhindert wird. Bei kleinen Entnahmeteilen reicht gegebenenfalls eine Beaufschlagung in der Mitte bzw. im Flächenschwerpunkt aus. Bei ausgedehnteren Entnahmeteilen und/oder bei Entnahmeteilen geringerer Eigensteifigkeit kann es ratsam sein, dass die Beaufschlagung möglichst flächig und/oder an mehreren über das Entnahmeteil verteilten Positionen erfolgt, damit eine Durchbiegung oder ein Kippen des Entnahmeteils verhindert wird.

Die von der Aushebevorrichtung auf das Entnahmeteil ausgeübte Kraft ist in weiterer Ausgestaltung der Erfindung ihrem Betrag nach einstellbar (Patentanspruch 10). Die Kraft, mit welcher die Aushebevorrichtung das Entnahmeteil in der Ausheberichtung beaufschlagt, wird insbesondere in Abhängigkeit von der Belastbarkeit des Entnahmeteils gewählt, die ihrerseits beispielsweise durch die Dicke oder das Material des Entnahmeteils bestimmt wird.

Bevorzugtermaßen weist die Aushebevorrichtung wenigstens eine gesteuert betätigbare Aushebeeinrichtung auf, mittels derer das Entnahmeteil beaufschlagbar und mit der Entnahmebewegung mit einer zu der Lagerungsebene parallelen Ausrichtung in der Ausheberichtung bewegbar ist (Patentanspruch 11). Die Wirkungsweise derartiger Aushebeeinrichtungen kann vielfältig sein. Beispielsweise pneumatische Aushebeeinrichtungen kommen ebenso in Frage wie mechanische Aushebeeinrichtungen.

Als Aushebeeinrichtungen vorgesehene Aushebeelemente können in Gegenrichtung der Ausheberichtung elastisch sein. Außerdem ist für die Aushebeelemente eine mehrteilige Ausbildung denkbar, wobei die Aushebeelemente vorzugsweise einen auswechselbaren Kontaktteil aufweisen, an welchem das betätigte Aushebeelement das Entnahmeteil beaufschlagt. Der auswechselbare Kontaktteil kann beispielsweise im Hinblick auf Härte, Reibkoeffizent oder Geometrie auf das zu beaufschlagende Entnahmeteil abgestimmt sein.

Als Aushebeeinrichtung bzw. Aushebeelement bevorzugt wird erfindungsgemäß ein Aushebestift (Patentanspruch 12). Mit einer derartigen punktuell wirkenden Aushebeeinrichtung können auf konstruktiv einfache Art und Weise Entnahmeteile mit wechselnder Geometrie und Größe von einem Restteil getrennt werden.

An wechselnde Anwendungsfälle lässt sich eine Bauart der erfindungsgemäßen Vorrichtung anpassen, deren Aushebevorrichtung eine Mehrzahl von Aushebeeinrichtungen umfasst, die ihrerseits unabhängig voneinander gesteuert betätigt werden können (Patentanspruch 13). Je nach Anwendungsfall können sämtliche oder nur einzelne der Aushebeeinrichtungen zum gegenseitigen Trennen von Entnahmeteilen und Restteilen genutzt werden. Weist die Aushebevorrichtung als Aushebeeinrichtungen eine Mehrzahl von Aushebestiften auf, so werden zum Trennen des Entnahmeteils und des Restteils Aushebestifte in einem Umfang betätigt, welcher von der Größe und der Form des Entnahmeteils abhängig ist.

In weiterer Ausgestaltung der Erfindung bilden die unabhängig voneinander betätigbaren Aushebeeinrichtungen die Werkstücklagerung und übernehmen dementsprechend eine Doppelfunktion (Patentanspruch 14).

Generell sind für die Werkstücklagerung erfindungsgemäßer Vorrichtungen unterschiedliche Bauarten denkbar. Erfindungsgemäß bevorzugt wird ausweislich Patentanspruch 15 eine Werkstücklagerung in Form einer plattenartigen Werkstückauflage, deren Platten-Hauptebene parallel zu der Lagerungsebene verläuft. Dabei ist die Aushebevorrichtung an einer Seite der plattenartigen Werkstückauflage und der Gegenhalter an der gegenüberliegenden Seite der plattenartigen Werkstückauflage angeordnet. Auf der plattenartigen Werkstückauflage gelagerte Entnahmeteile sind für die Aushebevorrichtung über Durchtrittsöffnungen der plattenartigen Werkstückauflage zugänglich, durch welche hindurch die Entnahmeteile durch die Aushebevorrichtung in der Ausheberichtung beaufschlagt werden können. Der Querschnitt der Durchtrittsöffnungen kann den Querschnitt der durch die Durchtrittsöffnungen hindurchgreifenden Aushebeeinrichtungen deutlich übersteigen. In diesem Fall können die Aushebeeinrichtungen flexibel und abgestimmt auf den jeweiligen Anwendungsfall im Innern der Durchtrittsöffnungen positioniert werden.

Die Durchtrittsöffnungen der plattenartigen Werkstückauflage geben diejenigen Stellen vor, an denen die Aushebevorrichtung auf Entnahmeteile einwirken kann. Die im Falle der Erfindungsbauart gemäß Patentanspruch 16 vorgesehene Stellvorrichtung dient dazu, die voneinander zu trennenden Werkstückteile einerseits und die plattenartige Werkstückauflage andererseits relativ zueinander parallel zu der Platten-Hauptebene derart zu positionieren, dass Entnahmeteile im Bereich von Durchtrittsöffnungen der plattenartigen Werkstückauflage angeordnet und somit für die Aushebevorrichtung zugänglich sind.

An der maschinellen Anordnung gemäß Patentanspruch 18 dient eine gemeinsame Werkstücklagerung, gegebenenfalls eine gemeinsame plattenartige Werkstückauflage, gleichzeitig als Werkstücklagerung der Vorrichtung zum gegenseitigen Trennen zweier Werkstückteile und als Werkstücklagerung der Bearbeitungseinrichtung der maschinellen Anordnung zur trennenden Werkstückbearbeitung.

Ausweislich der Patentansprüche 19 und 25 nehmen an der maschinellen Anordnung das Entnahmeteil und das Restteil bei ihrer Erzeugung mittels der Bearbeitungseinrichtung jeweils eine Bearbeitungsposition und bei ihrer gegenseitigen Trennung jeweils eine Entladeposition ein, wobei die Bearbeitungspositionen einerseits und die Entladepositionen andererseits in der Regel räumlich voneinander getrennt sind, dies aber nicht zwingend sein müssen. Der Gegenhalter der Vorrichtung zum gegenseitigen Trennen der beiden Werkstückteile kann sowohl die Bearbeitungsposition als auch die Entladeposition insbesondere des Entnahmeteils anfahren. Dementsprechend ist der Gegenhalter der Vorrichtung zum gegenseitigen Trennen der beiden Werkstückteile in der Lage, auch Funktionen im Bereich der Bearbeitungseinrichtung zu übernehmen, mittels derer die zu einem späteren Zeitpunkt voneinander zu trennenden Werkstückteile erzeugt werden.

Bevorzugtermaßen wird der Gegenhalter der Vorrichtung zum gegenseitigen Trennen der beiden Werkstückteile insbesondere an dem in der Bearbeitungsposition befindlichen Entnahmeteil dazu genutzt, das Entnahmeteil und das Restteil bei ihrer Erzeugung relativ zueinander mit einer Solllage zu positionieren (Patentansprüche 20, 27). Dieses Erfindungsmerkmal ist vor allem bei der Bearbeitung von dünnen Werkstücken von Bedeutung, da hier die Gefahr besteht, dass das Entnahmeteil unmittelbar nach dem Freischneiden gegenüber dem Restteil in einer Weise ausgerichtet ist, die eine spätere Trennung des Entnahmeteils von dem Restteil erschwert oder sogar gänzlich unmöglich macht. Etwa beim Laserschneiden von Blechen kann sich eine derartige Fehlausrichtung des Entnahmeteils infolge der Beaufschlagung des Entnahmeteils durch einen Schneidgasstrahl ergeben.

Die Gefahr einer Fehlausrichtung der bei der trennenden Werkstückbearbeitung erzeugten Werkstückteile relativ zueinander besteht außerdem dann, wenn einerseits die Bearbeitungspositionen und andererseits die Entladepositionen des Entnahmeteils und des Restteils räumlich voneinander getrennt sind und das Entnahmeteil und das Restteil gemeinsam von der jeweiligen Bearbeitungsposition in die jeweilige Entladeposition bewegt werden. Diesem Umstand wird in weiterer bevorzugter Ausgestaltung der Erfindung dadurch Rechnung getragen, dass die beiden Werkstückteile bei der gemeinsamen Bewegung aus ihren Bearbeitungspositionen in ihre Entladepositionen mittels des mitbewegten Gegenhalters der Vorrichtung zum gegenseitigen Trennen der beiden Werkstückteile relativ zueinander mit einer Solllage positioniert werden (Patentansprüche 21, 28). Auf diese Art und Weise kann insbesondere verhindert werden, dass die beiden Werkstückteile beim Transfer relativ zueinander kippen oder verrutschen oder dass eines der beiden Werkstückteile unter das andere Werkstückteil gerät.

Um die beiden Werkstückteilen bei der Erzeugung und/oder beim Transfer relativ zueinander mit einer Solllage zu positionieren, kann der Gegenhalter der Vorrichtung zum gegenseitigen Trennen der beiden Werkstückteile auf lediglich eines der beiden Werkstückteile aber auch auf beide Werkstückteile gleichzeitig einwirken.

Bei der Erzeugung der beiden Werkstückteile mittels der Bearbeitungseinrichtung kann durch entsprechende Programmierung des Bearbeitungsablaufs auf der erfindungsgemäßen maschinellen Anordnung sichergestellt werden, dass das Entnahmeteil zu dem Zeitpunkt des vollständigen Freischneidens mittels des Gegenhalters der Vorrichtung zum gegenseitigen Trennen der beiden Werkstückteile gegenüber dem Restteil in einer Solllage positioniert ist.

Grundsätzlich besteht die Möglichkeit, dass der Gegenhalter der Vorrichtung zum gegenseitigen Trennen der beiden Werkstückteilen in den Freigabezustand überführt ist, wenn er die beiden Werkstückteile bei ihrer Erzeugung und/oder bei dem Transfer aus ihren Bearbeitungspositionen in ihre Entladepositionen relativ zueinander mit einer Solllage positioniert. Erfindungsgemäß bevorzugt wird der Einsatz des in den Fixierungszustand überführten Gegenhalters zur gegenseitigen Positionierung der beiden Werkstückteile (Patentansprüche 22, 29). In diesem Fall wird im Rahmen des erfindungsgemäßen Fertigungsverfahrens der Gegenhalter der Vorrichtung zum gegenseitigen Trennen der beiden Werkstückteile zunächst in die Bearbeitungsposition des Entnahmeteils und/oder des Restteils bewegt, wo er in den Fixierungszustand überführt wird und im Fixierungszustand die beiden Werkstückteile bereits bei ihrer Erzeugung relativ zueinander mit einer Solllage positioniert. Anschließend wird der nach wie vor in den Fixierungszustand geschaltete Gegenhalter beim Transfer der Werkstückteilen aus der jeweiligen Bearbeitungsposition in die jeweilige Entladeposition gemeinschaftlich mit den relativ zueinander positionierten Werkstückteilen bewegt. An der Entladeseite wird der Gegenhalter dann in den Freigabezustand überführt, in welchem er das als Entnahmeteil vorgesehene und von der Aushebevorrichtung der Vorrichtung zum gegenseitigen Trennen der beiden Werkstückteile beaufschlagte Werkstückteil während der Entnahmebewegung mit einer zu der Lagerungsebene parallelen Ausrichtung abstützt.

Nachfolgend wird die Erfindung anhand beispielhafter schematischer Darstellungen näher erläutert. Es zeigen:
- Figur 1: eine maschinelle Anordnung zum Laserschneiden von Blechen mit einer Laser-Schneideinrichtung,
- Figur 2: die maschinelle Anordnung gemäß Figur 1 mit einer Vorrichtung erster Bauart zum gegenseitigen Trennen der mittels der Laser-Schneideinrichtung aus Blechen erzeugten Fertigteile und Restgitter,
- Figur 3: einen Gegenhalter der Vorrichtung gemäß Figur 2 zum gegenseitigen Trennen von Fertigteilen und Restgittern,
- Figur 4: eine Schnittdarstellung des Gegenhalters gemäß Figur 3 mit einer in Figur 3 angedeuteten Schnittebene,
- Figuren 5 bis 10: Darstellungen zur Veranschaulichung der Funktionsweise der in Figur 2 gezeigten Vorrichtung zum gegenseitigen Trennen von Fertigteilen und Restgittern,
- Figuren 11a, 11b: eine besondere Bauart des Gegenhalters gemäß Figur 3,
- Figuren 12a bis 12f: Darstellungen zur Veranschaulichung der Funktionsweise einer zweiten Bauart einer Vorrichtung zum gegenseitigen Trennen von Fertigteilen und Restgittern,

- Figur 13: eine dritte Bauart einer Vorrichtung zum gegenseitigen Trennen von Fertigteilen und Restgittern und
- Figuren 14 bis 16: den Gegenhalter der maschinellen Anordnung gemäß den Figuren 1 bis 10 in einer Bearbeitungsposition und in einer Entladeposition eines Fertigteils und eines Restgitters.

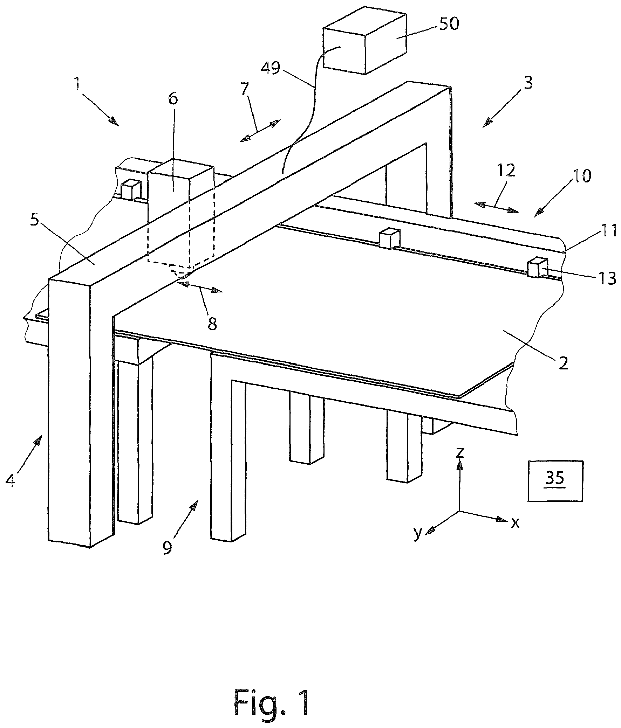

Gemäß Figur 1 umfasst eine maschinelle Anordnung 1 zum trennenden Bearbeiten von Blechen 2 als Bearbeitungseinrichtung eine Laser-Schneideinrichtung 3. Die Laserschneideinrichtung 3 weist eine portalartige Führungsstruktur 4 mit einem Portal-Querträger 5 sowie einen an dem Portal-Querträger 5 geführten Laserschneidkopf 6 auf. In senkrecht zueinander verlaufenden Richtungen ist der Laserschneidkopf 6 relativ zu dem Portal-Querträger 5 in Richtung von Doppelpfeilen 7, 8 beweglich. Über ein Lichtleitkabel 49 ist der Laserschneidkopf 6 mit einer Laserstrahlquelle in Form eines herkömmlichen Festkörperlasers 50 verbunden.

Die portalartige Führungsstruktur 4 übergreift einen zweiteiligen Werkstücktisch 9, auf welchem ein Blech 2 vor, während und nach der schneidenden Bearbeitung gelagert ist. Mittels des Laserschneidkopfs 6 der maschinellen Anordnung 1 wird das Blech 2 trennend bearbeitet. Dabei ist das Blech 2 auf dem Werkstücktisch 9 gelagert. Nach der Blechbearbeitung werden Fertigteile, die mittels des Laserschneidkopfs 6 freigeschnitten worden sind, von einem bei der Blechbearbeitung gleichfalls erzeugten Restgitter getrennt und anschließend aus dem Nahbereich der maschinellen Anordnung 1 abgeführt.

Zur Bewegung des Blechs 2 vor, während und nach seiner Bearbeitung dient eine in Figur 1 stark schematisiert dargestellte Blech-Bewegungseinheit 10. Die Blech-Bewegungseinheit 10 umfasst eine Schiene 11, die durch eine nicht gezeigte Führungseinrichtung in Richtung eines Doppelpfeils 12 beweglich geführt ist und an der ein Blech 2 mittels Spannpratzen 13 fixiert werden kann.

Mittels der Blech-Bewegungseinheit 10 wird das Blech 2 zur Bearbeitung im Arbeitsbereich des Laserschneidkopfs 6 positioniert. Während der Bearbeitung kann das Blech 2 durch die Blech-Bewegungseinheit 10 in Richtung des Doppelpfeils 12 bewegt werden. Damit erforderlichenfalls überlagerte Bearbeitungsbewegungen in Querrichtung des Doppelpfeils 12 werden von dem Laserschneidkopf 6 in Richtung des Doppelpfeils 7 ausgeführt. Außerdem verfügt der Laserschneidkopf 6 über eine Zusatzachse, die kurze hochdynamische Bewegungen des Laserschneidkopfs 6 in Richtung des Doppelpfeils 8 und somit in der Bewegungsrichtung der Blech-Bewegungseinheit 10 ermöglicht. Mit einem abschließenden Trennschnitt schneidet der Laserschneidkopf 6 ein Fertigteil von dem Restgitter frei, welches das Fertigteil umschließt. Dabei befinden sich das Fertigteil und das Restgitter an der maschinellen Anordnung 1 jeweils in einer Bearbeitungsposition. Nach Beendigung der Blechbearbeitung transferiert die Blech-Bewegungseinheit 10 das nunmehr freigeschnittene Fertigteil und das Restgitter gemeinsam aus der jeweiligen Bearbeitungsposition in eine Entladeposition.

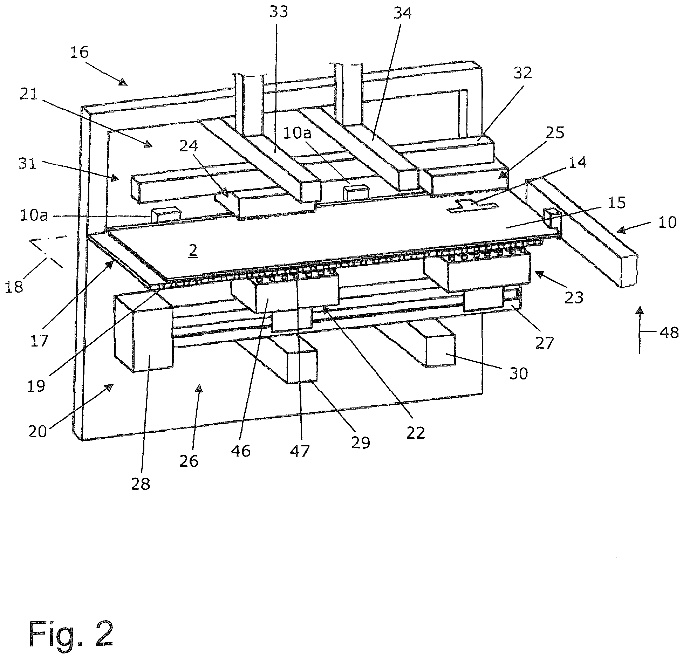

Sind das freigeschnittene Fertigteil und das Restgitter in ihre Entladepositionen transferiert, ergeben sich die in Figur 2 dargestellten Verhältnisse. Der Übersichtlichkeit halber zeigt Figur 2 an dem bearbeiteten Blech 2 lediglich ein einzelnes Fertigteil 14, das von einem Restgitter 15 umschlossen wird.

Mittels einer Entladeeinrichtung ist das Fertigteil 14 zunächst von dem Restgitter 15 zu trennen, ehe es aus dem Nahbereich der maschinellen Anordnung 1 abtransportiert werden kann. Die Entladeeinrichtung fungiert dementsprechend als Vorrichtung 16 zum gegenseitigen Trennen des Fertigteils 14 und des Restgitters 15. Bei dem Trennvorgang wird das Fertigteil 14 als Entnahmeteil aus dem Restgitter 15 entnommen, das seinerseits als Restteil 15 auf dem Werkstücktisch 9 verbleibt, ehe es nach der Entnahme sämtlicher Fertigteile ebenfalls aus dem Nahbereich der maschinellen Anordnung 1 abgeführt wird.

Als Werkstücklagerung für das Restgitter 15 und das Fertigteil 14 dient eine plattenartige Werkstückauflage 17 des Werkstücktischs 9. In bekannter Weise ist die Werkstückauflage 17 an ihrer Oberseite mit in Figur 2 nicht erkennbaren Borsten oder Rollen versehen, die eine reibungs- und kratzerfreie Bewegung des bearbeiteten Blechs 2 über die stationäre Werkstückauflage 17 ermöglichen. Die Auflagestellen des bearbeiteten Blechs 2 auf den Borsten oder den Rollen der Werkstückauflage 17 definieren eine in Figur 2 angedeutete Lagerungsebene 18 der Werkstückauflage 17. Die Lagerungsebene 18 verläuft parallel zu der Platten-Hauptebene der Werkstückauflage 17. Entlang der Lagerungsebene 18 fluchten das Fertigteil 14 und das Restgitter 15 miteinander. Dementsprechend sind das Fertigteil 14 und das Restgitter 15 senkrecht zu der Lagerungsebene 18 mit gegenseitiger Überdeckung angeordnet.

Wie aus Figur 2 hervorgeht, ist die Werkstückauflage 17 der maschinellen Anordnung 1 in dem dargestellten Beispielsfall als Lochplatte mit einer Vielzahl von Durchtrittsöffnungen 19 ausgebildet.

Unterhalb der Werkstückauflage 17 ist eine Aushebeeinheit 20, oberhalb der Werkstückauflage 17 eine Gegenhalteeinheit 21 der Vorrichtung 16 angeordnet.

Die Aushebeeinheit 20 umfasst zwei baugleiche Aushebevorrichtungen 22, 23, die Gegenhalteeinheit 21 zwei baugleiche Gegenhalter 24, 25.

Die Aushebevorrichtungen 22, 23 sind mittels einer Aushebe-Bewegungseinheit 26 parallel zu der Lagerungsebene 18 an jede beliebige Stelle unterhalb der Werkstückauflage 17 zustellbar. Zu diesem Zweck weist die Aushebe-Bewegungseinheit 26 eine Längsschiene 27 auf, entlang derer die Aushebevorrichtungen 22, 23 motorisch angetrieben verfahren können. Ein Antriebsmotor 28 der Aushebevorrichtungen 22, 23 ist in Figur 2 zu erkennen. Gemeinsam mit den Aushebevorrichtungen 22, 23 ist die Längsschiene 27 an zwei senkrecht zu der Längsschiene 27 verlaufenden Querschienen 29, 30 der Aushebe-Bewegungseinheit 26 verfahrbar. Die Querschienen 29, 30 können gemeinsam mit der Längsschiene 27 und den von dieser geführten Aushebevorrichtungen 22, 23 senkrecht zu der Werkstückauflage 17 bzw. der Lagerungsebene 18 angehoben und abgesenkt werden.

Auf entsprechende Art und Weise können die Gegenhalter 24, 25 der Gegenhalteeinheit 21 parallel zu der Lagerungsebene 18 jede beliebige Stelle an dem bearbeiteten Blech 2 anfahren und senkrecht zu der Lagerungsebene 18 angehoben und abgesenkt werden. Eine Gegenhalter-Bewegungseinheit 31 umfasst eine Längsschiene 32, längs derer die Gegenhalter 24, 25 motorisch angetrieben zugestellt werden können. Gemeinsam mit den Gegenhaltern 24, 25 ist die Längsschiene 32 motorisch angetrieben entlang zweier Querschienen 33, 34 verfahrbar, die ihrerseits senkrecht zu der Längsschiene 32 verlaufen und die zusammen mit der Längsschiene 32 und den daran geführten Gegenhaltern 24, 25 in vertikaler Richtung angehoben und abgesenkt werden können.

Alle wesentlichen Funktionen der maschinellen Anordnung 1 und somit insbesondere auch alle wesentlichen Funktionen der Vorrichtung 16 sind numerisch gesteuert. Eine numerische Steuerungseinheit 35 ist in Figur 1 angedeutet. Die Koordinatenachsen der numerischen Steuerung der maschinellen Anordnung 1 beziehungsweise der Vorrichtung 16 sind in Figur 1 mit x, y, z bezeichnet.

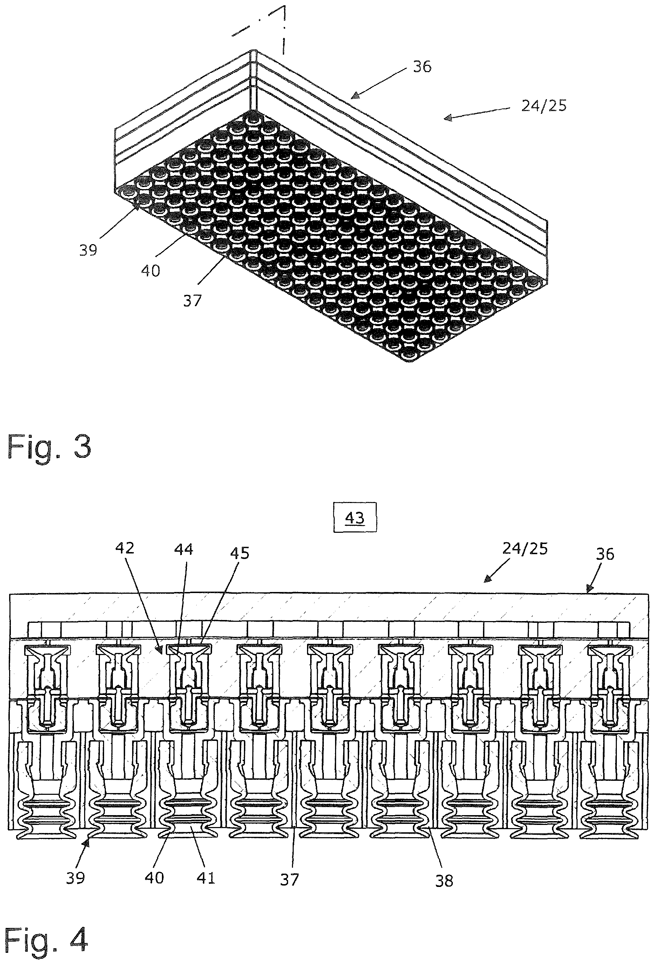

In den Figuren 3 und 4 ist einer der baugleichen Gegenhalter 24, 25 der Entladeeinrichtung 16 im Einzelnen dargestellt.

Die Gegenhalter 24, 25 besitzen demnach ein kastenartiges Gegenhaltergehäuse 36 mit einer als Stützkörper dienenden planen Anlageplatte 37, die mit einer Vielzahl von Bohrungen 38 versehen ist. Die Bohrungen 38 nehmen Halteeinrichtungen in Form von Sauggreifern 39 auf. Gefaltete Saugermanschetten 40 der Sauggreifer 39 stehen im Ausgangszustand der Gegenhalter 24, 25 gegenüber der Anlageplatte 37 vor und sind senkrecht zu der Anlageplatte 37 elastisch verformbar. Ein Saugraum 41 im Innern einer jeden Saugermanschette 40 kann über ein schaltbares Ventil 42 mit einem in Figur 4 angedeuteten Unterdruckerzeuger 43 verbunden werden. In Figur 4 sind die Ventile 42 geöffnet. Es besteht folglich eine Verbindung zwischen den Saugräumen 41 der Sauggreifer 39 und dem Unterdruckerzeuger 43. Der Unterdruckerzeuger 43 kann Luft über die Saugräume 41 ansaugen.

Ist die Einlassseite der Saugermanschette 40 eines Sauggreifers 39 offen und wird der Unterdruckerzeuger 43 eingeschaltet, so wird das betreffende Ventil 42 geschlossen, indem unter der Wirkung des von dem Unterdruckerzeuger 43 generierten und zu dem Unterdruckerzeuger hin gerichteten Luftstroms eine Dichtlippe 44 des Ventils 42 gegen eine Dichtfläche 45 des Gegenhaltergehäuses 36 gezogen wird. Dadurch wird die zunächst bestehende Strömungsverbindung zwischen dem betreffenden Saugraum 41 und dem Unterdruckerzeuger 43 unterbrochen.

Ist die Einlassseite der Saugermanschette 40 eines Sauggreifers 39 verschlossen, so wird beim Einschalten des Unterdruckerzeugers 43 an dem betreffenden Saugraum 41 ein Unterdruck angelegt. Es ergibt sich kein nennenswerter Luftstrom in Richtung auf den Unterdruckerzeuger 43 und die Dichtlippe 44 des Ventils 42 behält ihren Abstand von der Dichtfläche 45 bei. Das Ventil 42 bleibt somit geöffnet und an dem Sauggreifer 39 kann sich eine Haltekraft aufbauen.

Die baugleichen Aushebevorrichtungen 22, 23 besitzen ausweislich Figur 2 ein Aushebegehäuse 46, an welchem die Aushebevorrichtungen 22, 23 an die Längsschiene 27 der Aushebe-Bewegungseinheit 26 angebunden sind. Im Innern des Aushebegehäuses 46 ist eine Mehrzahl herkömmlicher und in den Abbildungen nicht im Einzelnen gezeigter pneumatischer Kolben-Zylinder-Einheiten mit jeweils einem doppelt wirkenden Zylinder untergebracht. Mit jedem der Kolben verbunden ist eine Aushebeeinrichtung in Form eines Aushebestifts 47.

Die Kolben-Zylinder-Einheiten im Innern des Aushebegehäuses 46 sind getrennt ansteuerbar und können unabhängig voneinander mit einer nicht im Einzelnen gezeigten Druckquelle verbunden werden. Durch Betätigen der Kolben-Zylinder-Einheiten werden die Aushebestifte 47 in vertikaler Richtung aus dem Aushebegehäuse 46 ausgefahren oder in das Aushebegehäuse 46 zurückbewegt. Der Querschnitt der Aushebestifte 47 darf maximal dem Querschnitt der Durchtrittsöffnungen 19 an der Werkstückauflage 17 entsprechen. In dem dargestellten Beispielsfall ist der Querschnitt der Aushebestifte 47 kleiner als der Querschnitt der Durchtrittsöffnungen 19.

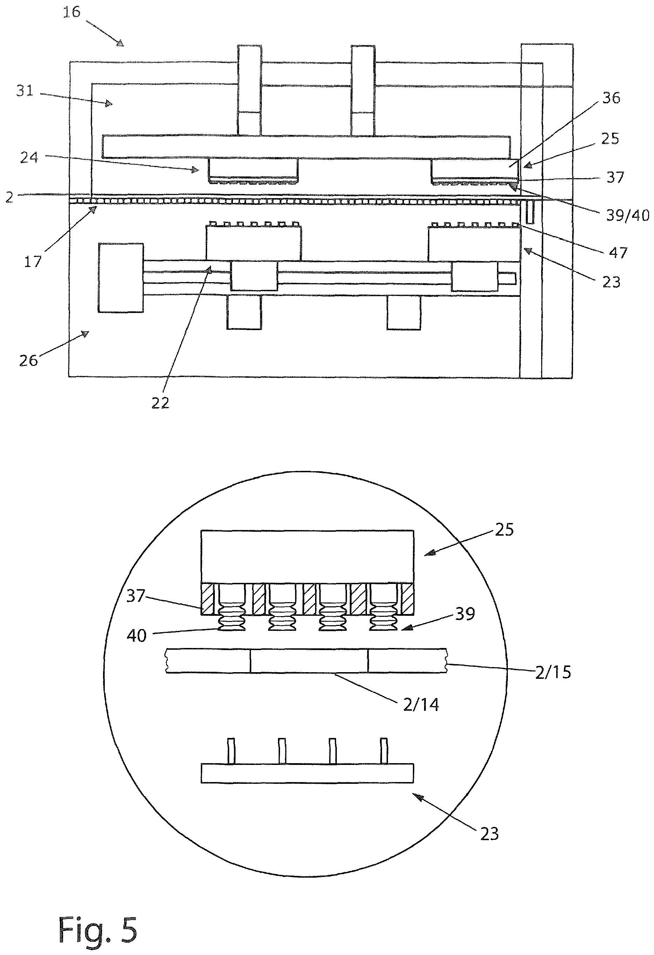

Ausweislich der Figuren 5 bis 10 werden das Fertigteil 14 und das Restgitter 15 wie folgt voneinander getrennt:
Nachdem an dem Blech 2 mittels des Laserschneidkopfs 6 das Fertigteil 14 freigeschnitten und bei dieser Gelegenheit auch das Restgitter 15 erzeugt worden ist, werden das Fertigteil 14 und das Restgitter 15 mittels der Blech-Bewegungseinheit 10 gemeinsam auf der Werkstückauflage 17 aus der jeweiligen Bearbeitungsposition in die jeweilige Entladeposition gemäß Figur 2 bewegt. Dabei werden das bearbeitete Blech 2 und die Werkstückauflage 17 relativ zueinander derart positioniert, dass das Fertigteil 14 eine hinreichende Anzahl von Durchtrittsöffnungen 19 der Werkstückauflage 17 überdeckt. Als Stellvorrichtung zur gegenseitigen Positionierung der voneinander zu trennenden Werkstückteile einerseits und der Werkstückauflage 17 andererseits fungiert zum einen die Blech-Bewegungseinheit 10, mittels derer das bearbeitete Blech 2 mit dem Fertigteil 14 und dem Restgitter 15 in der x-Richtung des Koordinatensystems der maschinellen Anordnung 1 zugestellt werden kann. Als weitere Stellvorrichtung ist eine Auflage-Bewegungseinheit 10a vorgesehen, die eine Positionierung der Werkstückauflage 17 in der y-Richtung des Koordinatensystems der maschinellen Anordnung 1 und somit senkrecht zu der Bewegungsrichtung der Blech-Bewegungseinheit 10 ermöglicht. Die Position, welche das Fertigteil 14 in dem Koordinatensystem der numerischen Steuerung der maschinellen Anordnung 1 einnimmt, ist definiert.

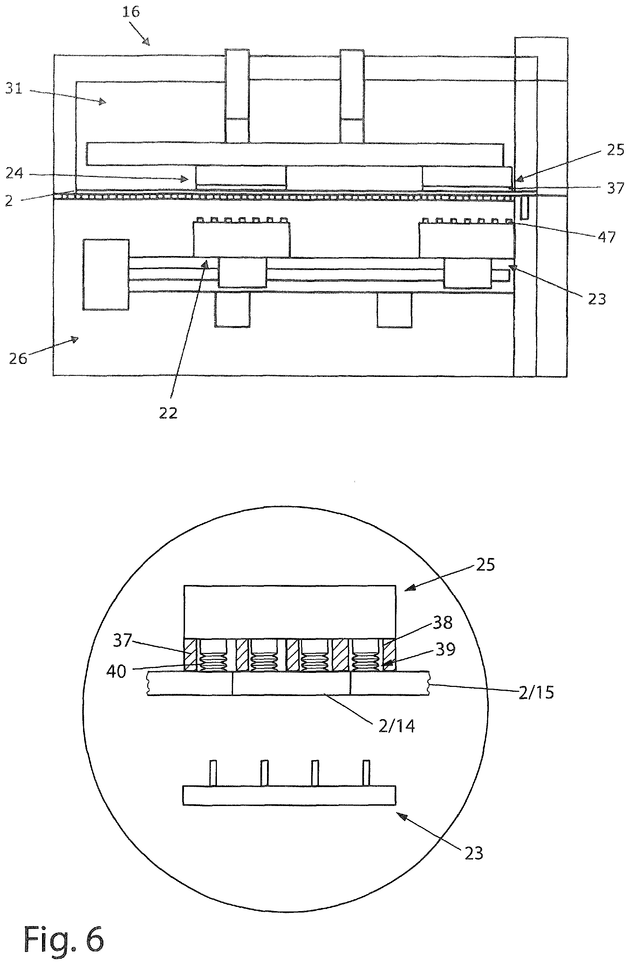

Numerisch gesteuert wird die Aushebe-Bewegungseinheit 26 unterhalb der Werkstückauflage 17 derart betätigt, dass die Aushebevorrichtung 23 eine Aushebeposition unterhalb des Fertigteils 14 anfährt. Zeitgleich mit der Positionierung der Aushebevorrichtung 23 wird an der gegenüberliegenden Seite der Werkstückauflage 17 der Gegenhalter 25 durch numerisch gesteuerte Betätigung der Gegenhafter-Bewegungseinheit 31 in eine Position oberhalb des in der Entladeposition befindlichen Fertigteils 14 verfahren. Es ergeben sich damit die Verhältnisse gemäß den Figuren 2 und 5, wobei Figur 5 zusätzlich zu der Gesamtanordnung einen Ausschnitt mit der stark schematisierten Aushebevorrichtung 23 und mit dem der Aushebevorrichtung 23 an dem Fertigteil 14 und dem Restgitter 15 gegenüberliegenden Gegenhalter 25 zeigt. Die Werkstückauflage 17 ist in dem Ausschnitt der Einfachheit halber nicht dargestellt. Entsprechende Ausschnittsdarstellungen finden sich in den Figuren 6 bis 10.

Der Unterdruckerzeuger 43 für die Gegenhalter 24, 25 ist zu diesem Zeitpunkt ausgeschaltet, die Sauggreifer 39 an dem Gegenhalter 25 sind von dem Fertigteil 14 und auch von dem gleichfalls in einer Entladeposition angeordneten Restgitter 15 beabstandet. Die Sauggreifer 39 befinden sich folglich in einem Außerfunktionszustand, der Gegenhalter 25 damit in einem Freigabezustand. Die Saugermanschetten 40 der Sauggreifer 39 stehen gegenüber der Anlageplatte 37 des Gegenhaltergehäuses 36 zu dem bearbeiteten Blech 2 hin vor.

Mit diesem Funktionszustand wird der Gegenhalter 25 aus der Position gemäß den Figuren 2 und 5 durch eine entsprechende Vertikalbewegung der Gegenhalterbewegungseinheit 31 abgesenkt und dadurch auf das bearbeitete Blech 2 aufgesetzt (Figur 6). Während der Absenkbewegung laufen zunächst die Sauggreifer 39 des Gegenhalters 25 mit den freien Enden der Saugermanschetten 40 auf die Oberseite des bearbeiteten Blechs 2 auf. Bei fortgesetzter Absenkbewegung des Gegenhalters 25 werden die Saugermanschetten 40 der Sauggreifer 39 komprimiert und infolgedessen stärker gefaltet und in das Innere der Bohrungen 38 an der Anlageplatte 37 des Gegenhalters 25 zurückgedrängt, bis schließlich die Anlageplatte 37 des Gegenhalters 25 bei in Kontakt mit dem bearbeiteten Blech 2 befindlichen Saugermanschetten 40 auf der Blechoberfläche aufsetzt.

Da die flächige Erstreckung des Gegenhalters 25 parallel zu dem bearbeiteten Blech 2 die Abmessungen des Fertigteils 14 erheblich übersteigt, liegt nur ein Teil der Sauggreifer 39 des Gegenhalters 25 an dem Fertigteil 14 an. Die restlichen Sauggreifer 39 stützen sich auf dem Restgitter 15 ab.

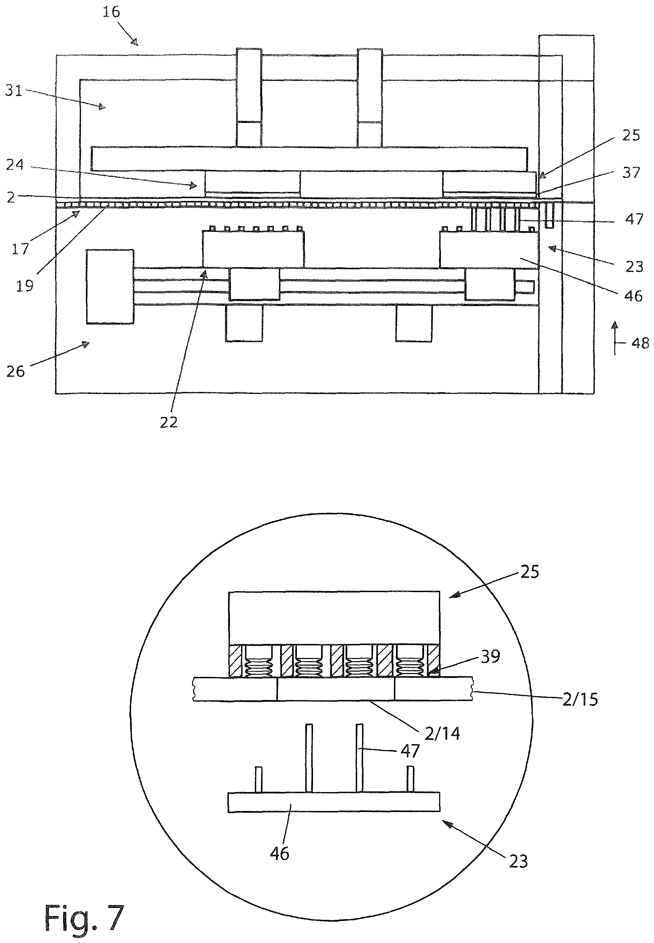

Gemäß Figur 7 werden nun an der Aushebevorrichtung 23 diejenigen Aushebestifte 47 betätigt, die unterhalb des Fertigteils 14 liegen und für welche das Fertigteil 14 über Durchtrittsöffnungen 19 der Werkstückauflage 17 zugänglich ist. Die übrigen Aushebestifte 47 der Aushebevorrichtung 23 behalten ihre Ausgangslage bei, in der sie in das Aushebegehäuse 46 zurückgezogen sind.

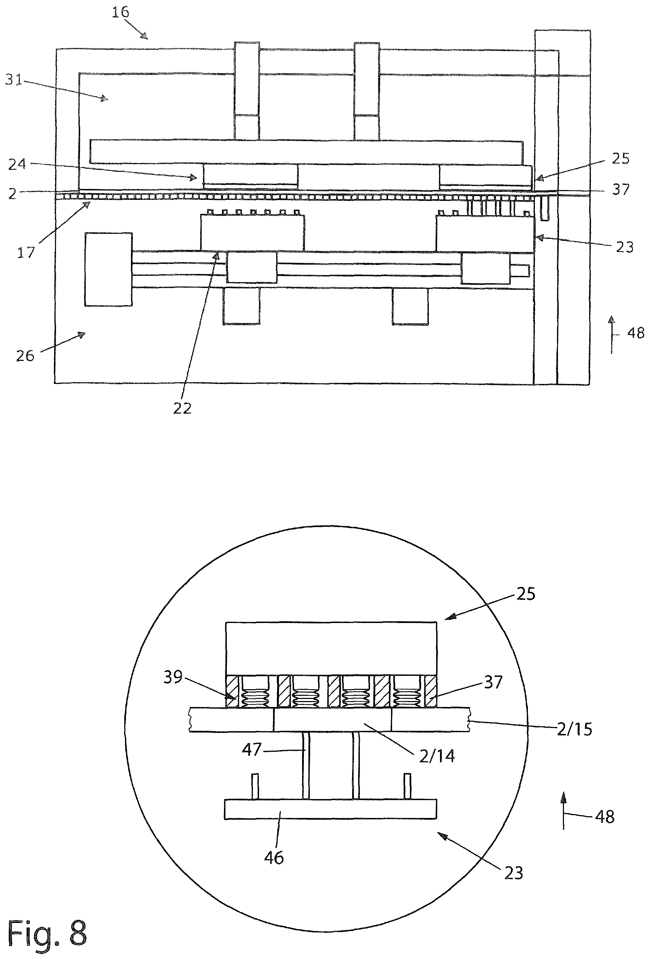

Mit den aus dem Aushebegehäuse 46 ausgefahrenen Aushebestiften 47 wird die Aushebevorrichtung 23 durch eine entsprechende Hubbewegung der Aushebe-Bewegungseinheit 26 aus der Position gemäß Figur 7 in die Position gemäß Figur 8 angehoben. Dabei werden die ausgefahrenen Aushebestifte 47 in die diesen anfänglich gegenüberliegenden Durchtrittsöffnungen 19 der Werkstückauflage 17 eingeführt und durch diese Durchtrittsöffnungen 19 hindurch an die Unterseite des Fertigteils 14 angelegt. Das Fertigteil 14 wird nun an seiner Unterseite durch die Aushebevorrichtung 23 in einer Ausheberichtung 48 beaufschlagt und an seiner Oberseite durch den Gegenhalter 25, im Einzelnen durch die Anlageplatte 37 des Gegenhalters 25, großflächig in der Ausheberichtung 48 abgestützt. Dabei bildet die Anlageplatte 37 des nach wie vor in den Freigabezustand geschalteten Gegenhalters 25 für das von der Aushebevorrichtung 23 in der Ausheberichtung 48 beaufschlagte Fertigteil 14 eine in der Ausheberichtung 48 starre Anlage in Form eines Stützkörpers aus, welcher das Fertigteil 14 mit einer zu der Lagerungsebene 18 der Werkstückauflage 17 parallelen Ausrichtung abstützt. Die nach wie vor im Außerfunktionszustand befindlichen Sauggreifer 39 des Gegenhalters 25 liegen an der Oberseite des parallel zu der Lagerungsebene 18 ausgerichteten Fertigteils 14 mit einer aus ihrer elastischen Verformung resultierenden Vorspannung an.

Ein Druckanstieg, der sich mit der Beaufschlagung des Fertigteils 14 durch die Aushebestifte 47 der Aushebevorrichtung 23 und der gleichzeitigen Abstützung des Fertigteils 14 durch die Anlageplatte 37 des Gegenhalters 25 in der Druckversorgung der Aushebevorrichtung 23 einstellt, indiziert für die numerische Steuerung der Vorrichtung 16, dass das Fertigteil 14 zwischen den ausgefahrenen Aushebestiften 47 einerseits und der Anlageplatte 37 des Gegenhalters 25 andererseits eingespannt und folglich parallel zu der Lagerungsebene 18 ausgerichtet ist.

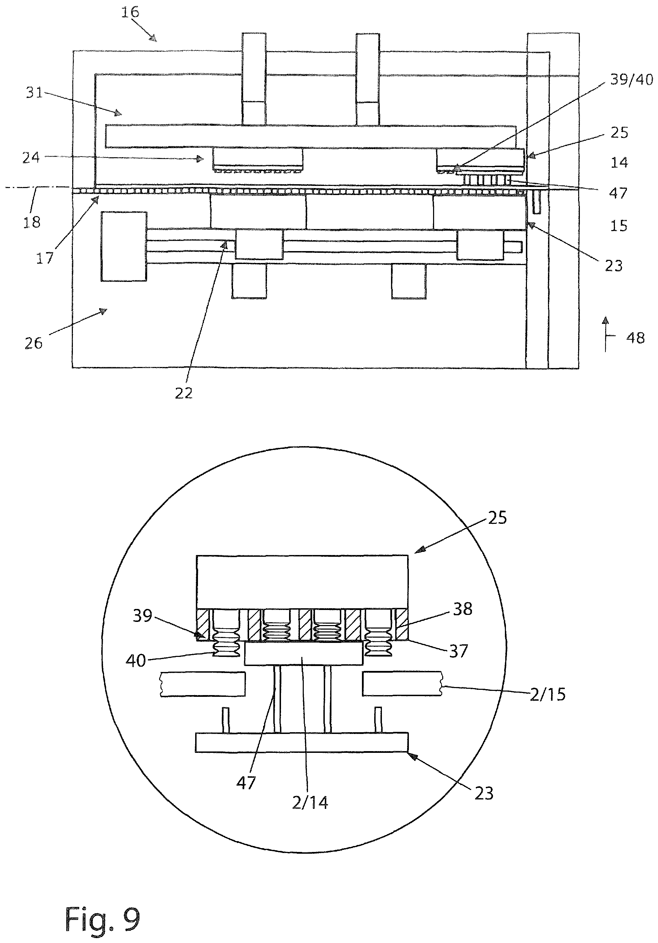

Ein in Folge des genannten Druckanstiegs generiertes Steuersignal bewirkt, dass die Aushebevorrichtung 23 und der Gegenhalter 25 mittels der Aushebe-Bewegungseinheit 26 und der Gegenhalter-Bewegungseinheit 31 synchron mit einer Entnahmebewegung in der Ausheberichtung 48 bewegt werden. Dabei wird das zunächst in der Ebene des Restgitters 15 angeordnete Fertigteil 14 aus dem Restgitter 15 ausgehoben und von dem Restgitter 15 getrennt (Figur 9). Die zuvor in das Innere der Bohrungen 38 an der Anlageplatte 37 des Gegenhalters 25 zurückgedrängten Saugermanschetten 40 der freien, nicht von dem Fertigteil 14 überdeckten Sauggreifer 39 längen sich in der Anfangsphase der Entnahmebewegung und wirken dabei nach Art von Niederhaltern auf das auf der Werkstückauflage 17 verbleibende Restgitter 15 ein.

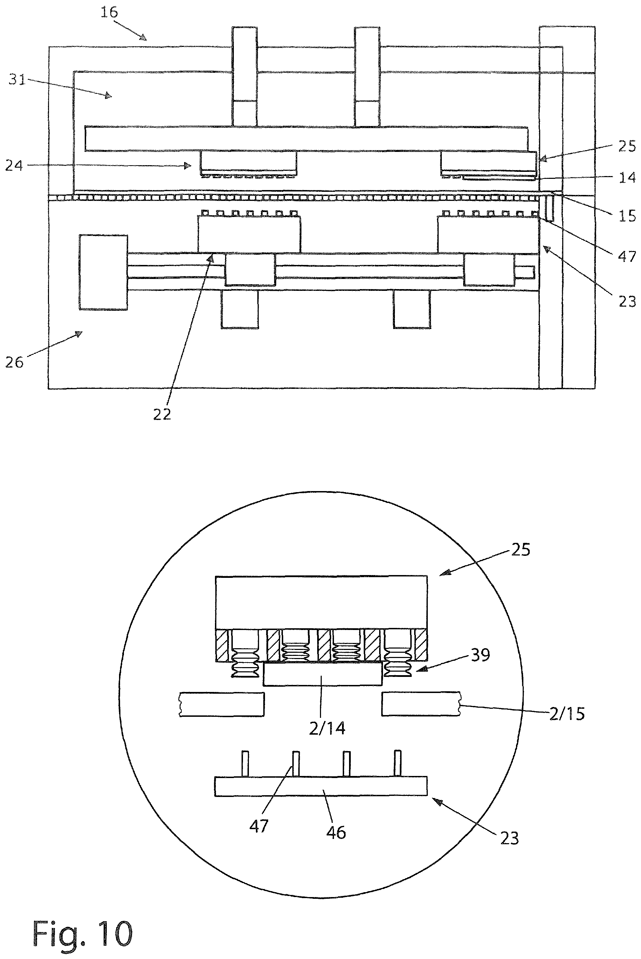

Sobald mittels eines Wegmesssystems der numerischen Steuerung der Vorrichtung 16 während der gemeinsamen Hubbewegung der Aushebevorrichtung 23, des Gegenhalters 25 und des zwischen der Aushebevorrichtung 23 und dem Gegenhalter 25 geklemmten Fertigteils 14 für den Betrag der Hubbewegung ein Wert ermittelt wird, aufgrund dessen sichergestellt ist, dass auch die neben dem Fertigteil 14 angeordneten und gegenüber der Anlageplatte 37 des Gegenhalters 25 vorstehenden Sauggreifer 39 des Gegenhalters 25 einen deutlichen Abstand von der Oberfläche des auf der Werkstückauflage 17 verbliebenen Restgitters 15 aufweisen, wird der Unterdruckerzeuger 43 der Gegenhalter 24, 25 eingeschaltet. Infolgedessen werden diejenigen Sauggreifer 39, die an dem Fertigteil 14 anliegen, von dem Außerfunktionszustand in einen Funktionszustand geschaltet. Der Gegenhalter 25 wird dadurch aus dem Freigabezustand in den Fixierungszustand überführt, in welchem das Fertigteil 14 an dem Gegenhalter 25 festgelegt ist. Ist das Fertigteil 14 an dem Gegenhalter 25 fixiert, werden die Aushebestifte 47, die zuvor das Fertigteil 14 beaufschlagt haben, in das Aushebegehäuse 46 der Aushebevorrichtung 23 zurückgezogen und die Aushebevorrichtung 23 wird durch eine entsprechende Absenkbewegung der Aushebe-Bewegungseinheit 26 in die Position gemäß Figur 10 abgesenkt.

Grundsätzlich, beispielsweise bei einer entsprechend großen Werkstückdicke, können freie, nicht von einem Fertigteil überdeckte Sauggreifer der Gegenhalter auch bereits vor Beendigung der Entnahmebewegung, also bei nach wie vor bestehender gegenseitiger Überdeckung des Fertigteils und des Restgitters in der Ausheberichtung, einen derart großen Abstand von dem Restgitter aufweisen, dass
sie ohne das Restgitter unerwünschterweise anzusaugen aus dem Außerfunktionszustand in den Funktionszustand geschaltet werden können.

Der Gegenhalter 25 verfährt mit dem daran fixierten Fertigteil 14 mittels der Gegenhalter-Bewegungseinheit 31 aus dem Nahbereich der Werkstückauflage 17.

Um das Fertigteil 14 an einem Ablageort für das Fertigteil 14 von dem Gegenhalter 25 zu lösen, werden die Sauggreifer 39, welche das Fertigteil 14 halten, drucklos geschaltet.

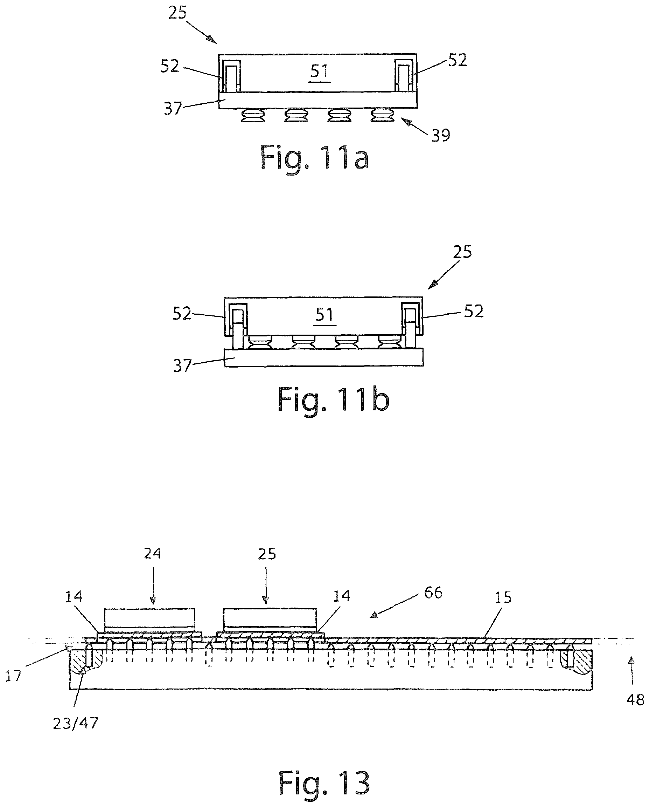

Besondere konstruktive Maßnahmen, die dazu dienen, das Lösen eines aus dem Nahbereich der Werkstückauflage 17 abgeführten Fertigteils 14 besonders funktionssicher zu gestalten, sind im Falle einer in den Figuren 11a und 11b dargestellten Bauart des Gegenhalters 25 vorgesehen.

An dem Gegenhalter 25 der Figuren 11a und 11b ist die Anlageplatte 37 relativ zu einem Grundkörper 51 des Gegenhalters 25 zustellbar. Zu diesem Zweck sind Stellzylinder 52 vorgesehen, mittels derer die Anlageplatte 37 aus einer grundkörpernahen Position gemäß Figur 11a in eine grundkörperferne Position gemäß 11b bewegt werden kann.

Zum Lösen eines an einem oder mehreren Sauggreifern 39 des Gegenhalters 25 gehaltenen Fertigteils 14 werden zunächst die betreffenden Sauggreifer 39 drucklos geschaltet. Anschließend wird die Anlageplatte 37 mittels der Stellzylinder 52 aus der Position gemäß Figur 11a in die Position gemäß Figur 11b verschoben, in welcher die Anlageplatte 37 gegenüber den Sauggreifern 39 in Gegenrichtung der Ausheberichtung 48 versetzt ist. Aufgrund der von der Anlageplatte 37 relativ zu den Sauggreifern 39 ausgeführten Bewegung wird das Fertigteil 14 von den betreffenden Sauggreifern 39 weggedrückt. Dadurch wird gewährleistet, dass das Fertigteil 14 mit Sicherheit von dem Gegenhalter 25 freikommt.

Nachdem im vorliegenden Beispielsfall zwei Vorrichtungspaare mit jeweils einer Aushebevorrichtung 22, 23 und einem Gegenhalter 24, 25 vorgesehen sind, kann die Vorrichtung 16 gleichzeitig zwei Fertigteile 14 in der vorstehend beschriebenen Weise aus dem Restgitter 15 entnehmen und aus dem Nahbereich der Werkstückauflage 17 abtransportieren.

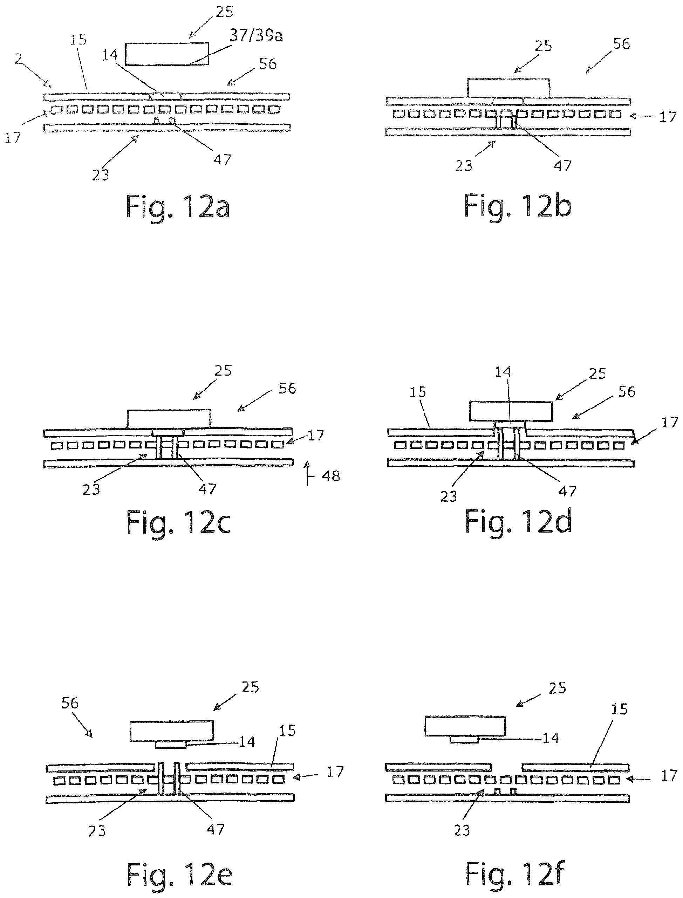

Eine in den Figuren 12a bis 12f stark schematisiert dargestellte Vorrichtung 56 zum gegenseitigen Trennen von Fertigteilen 14 und Restgittern 15 unterscheidet sich von der Vorrichtung 16 dadurch, dass zum Trennen eines Fertigteils 14 von einem Restgitter 15 nicht die gesamte Aushebevorrichtung 23 angehoben wird sondern stattdessen die Aushebestifte 47 der Aushebevorrichtung 23 einen gegenüber den Verhältnissen gemäß den Figuren 2 bis 10 vergrößerten Hub ausführen. Außerdem ist ein Gegenhalter 25 vorgesehen, der für das Fertigteil 14 eine Anlageplatte 37 aufweist, die als flächiger Elektromagnet 39a ausgeführt ist und folglich unmittelbar eine flächige, formstabile Halteeinrichtung für das Fertigteil 14 ausbildet.

Figur 13 zeigt eine Vorrichtung 66 zum gegenseitigen Trennen von Fertigteilen 14 und Restgittern 15, im Falle derer abweichend von den Vorrichtungen 16, 56 die Aushebestifte 47 der Aushebevorrichtung 23 unmittelbar die Werkstückauflage 17 ausbilden. Auch die Aushebestifte 47 der Vorrichtung 66 sind einzeln ansteuerbar. Zum Trennen von Fertigteilen 14 von dem Restgitter 15 werden die in dem jeweiligen Anwendungsfall benötigten Aushebestifte 47 betätigt und in der Ausheberichtung 48 angehoben.

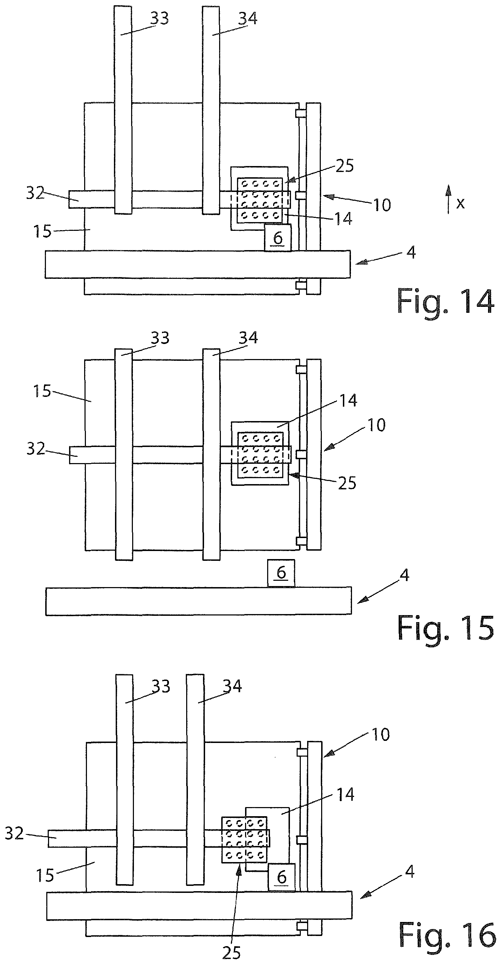

Gemäß den Figuren 14 bis 16 können die Gegenhalter 24, 25 der Vorrichtung 16 zum gegenseitigen Trennen des Fertigteils 14 und des Restgitters 15 nicht nur an dem in die Entladeposition bewegten Fertigteil 14 sondern auch an dem in der Bearbeitungsposition befindlichen Fertigteil 14 eingesetzt werden. Im Einzelnen gezeigt ist in den Darstellungen lediglich der Gegenhalter 25.

Gemäß Figur 14 ist der Gegenhalter 25 mit Hilfe der Gegenhalter-Bewegungseinheit 31 in eine Position nahe dem Laserschneidkopf 6 bewegt worden. Der Gegenhalter 25 ist auf das noch nicht vollständig von dem Restgitter 15 getrennte Fertigteil 14 abgesenkt und befindet sich im Fixierungszustand. Dementsprechend ist das Fertigteil 14 an dem Gegenhalter 25 festgelegt. Das Fertigteil 14 nimmt an der maschinellen Anordnung 1 eine Bearbeitungsposition ein und steht gegenüber dem Gegenhalter 25 zu dem Laserschneidkopf 6 hin so weit vor, dass der abschließende Trennschnitt, mit welchem das Fertigteil 14 von dem Restgitter 15 freigeschnitten wird, erstellt werden kann. Das Restgitter 15 wird von den Spannpratzen 13 der Blech-Bewegungseinheit 10 in einer Bearbeitungsposition gehalten. Aufgrund seiner Fixierung an dem Gegenhalter 25 behält das Fertigteil 14 nach dem abschließenden Trennen von dem Restgitter 15 gegenüber diesem eine Ausrichtung bei, aufgrund derer das Fertigteil 14 mit dem Restgitter 15 fluchtet und insbesondere nicht innerhalb des Restgitters 15 verkippt ist.

Ist das Fertigteil 14 vollständig freigeschnitten, so verfahren die Blech-Bewegungseinheit 10 mit dem daran festgelegten Restgitter 15 und der nach wie vor in den Fixierungszustand geschaltete Gegenhalter 25 mit dem daran fixierten Fertigteil 14 synchron in der x-Richtung des Koordinatensystems der maschinellen Anordnung 1. Dadurch gelangen das Fertigteil 14 und das Restgitter 15 aus ihren Bearbeitungspositionen gemäß Figur 14 in die Entladepositionen gemäß Figur 15. Das Fertigteil 14 und das Restgitter 15 sind nun aus ihren Bearbeitungspositionen in ihre Entladepositionen transferiert. Als Werkstücktransfervorrichtung dienen die Blech-Bewegungseinheit 10 und die Gegenhalter-Bewegungseinheit 31.

Während des Transfers ändert sich die Position des Fertigteils 14 relativ zu dem Restgitter 15 allenfalls geringfügig. Infolgedessen ist das Fertigteil 14 in der Entladeposition derart gegenüber dem Restgitter 15 positioniert, dass es in der vorstehend beschriebenen Art und Weise problemlos aus dem Restgitter 15 entnommen werden kann.

Zu diesem Zweck werden die Sauggreifer 39 des bis dato im Fixierungszustand befindlichen Gegenhalters 25 drucklos geschaltet. Damit befindet sich der an das Fertigteil 14 angelegte Gegenhalter 25 in dem Freigabezustand gemäß den Figuren 6, 7 und 8. Zum Zeitpunkt der Umschaltung des Gegenhalters 25 von dem Fixierungszustand in den Freigabezustand kann die Aushebevorrichtung 23 an der Unterseite der Werkstückauflage 17 bereits eine Aushebeposition einnehmen. Ist die Aushebevorrichtung 23 beim Umschalten des Gegenhalters 25 bereits in eine Aushebeposition bewegt, so können die für die Trennung des Fertigteils 14 von dem Restgitter 15 genutzten Aushebestifte 47 zunächst noch in das Aushebegehäuse 46 zurückgezogen sein (Verhältnisse gemäß Figur 6). Alternativ besteht die Möglichkeit, dass die für die Trennung des Fertigteils 14 von dem Restgitter 15 genutzten Aushebestifte 47 beim Umschalten des Gegenhalters 25 vom Fixierungszustand in den Freigabezustand bereits aus dem Aushebegehäuse 46 ausgefahren sind und dabei entweder von dem Fertigteil 14 beabstandet sind (Verhältnisse gemäß Figur 7) oder bereits das Fertigteil 14 in der Ausheberichtung 48 beaufschlagen (Verhältnisse gemäß Figur 8). In jedem Fall kann das Fertigteil 14 ausgehend von den bei der Umschaltung des Gegenhalters 25 bestehenden Verhältnissen in der vorstehend beschriebenen Art und Weise von dem Restgitter 15 getrennt werden.

Abweichend von Figur 14 zeigt Figur 16 den in den Fixierungszustand geschalteten Gegenhalter 25 der Vorrichtung 16 zum gegenseitigen Trennen des Fertigteils 14 und des Restgitters 15, wie er sowohl an das in der Bearbeitungsposition befindliche Fertigteil 14 als auch an das in der Bearbeitungsposition angeordnete Restgitter 15 angelegt ist. Da der Gegenhalter 25 das Fertigteil 14 fixiert und gleichzeitig an dem Restgitter 15 festgelegt ist, kann der Gegenhalter 25 besonders funktionssicher das Fertigteil 14 nach dem abschließenden Freischneiden mit einer Solllage gegenüber dem Restgitter 15 positionieren und diese Sollpositionierung während des gemeinsamen Transfers des Fertigteils 14 und des Restgitters 15 aus der jeweiligen Bearbeitungsposition in die jeweilige Entladeposition aufrechterhalten.

Sind das Fertigteil 14 und das Restgitter 15 in ihre Entladepositionen transferiert, wird der sowohl das Fertigteil 14 als auch das Restgitter 15 überdeckende Gegenhalter 25 zunächst aus dem Fixierungszustand in den Freigabezustand überführt. Zu diesem Zeitpunkt kann die Aushebevorrichtung 23 an der Unterseite der Werkstückauflage 17 bereits in eine Aushebeposition bewegt sein.

Bei entsprechender Beschaffenheit, insbesondere bei entsprechender Eigensteifigkeit des Fertigteils 14 dürfen die zum Trennen des Fertigteils 14 von dem Restgitter 15 genutzten Aushebestifte 47 der Aushebevorrichtung 23 beim Umschalten des Gegenhalters 25 das Fertigteil 14 bereits in der Ausheberichtung 48 beaufschlagen. Denn ist das Fertigteil 14 insbesondere hinreichend eigensteif, so ist es für die Sollausrichtung des Fertigteils 14 gegenüber dem Restgitter 15 unschädlich, wenn der Gegenhalter 25 nur einen verhältnismäßig kleinen Bereich des von der Aushebevorrichtung 23 beaufschlagten Fertigteils 14 in der Ausheberichtung 48 abstütz. Andernfalls muss der in den Freigabezustand geschaltete Gegenhalter 25 vor der Überführung der Aushebevorrichtung 23 in den Funktionszustand gemäß Figur 8 zunächst an der Oberseite des Fertigteils 14 in eine Position umgesetzt werden, in der er das Fertigteil 14 großflächiger als zuvor in der Ausheberichtung 48 abstützt. Im Übrigen wird an der maschinellen Anordnung 1 zum Trennen des Fertigteils 14 von dem Restgitter 15 in der vorstehend beschriebenen Weise verfahren.

## Patentansprüche

1. Vorrichtung zum gegenseitigen Trennen zweier Werkstückteile eines plattenartigen Werkstücks, insbesondere eines Blechs (2),
• mit einer Werkstücklagerung (17), welche eine Lagerungsebene (18) definiert und welche bei Lagerung der beiden voneinander zu trennenden Werkstückteile diese mit gegenseitiger Überdeckung senkrecht zu der Lagerungsebene (18) lagert,
• mit einer Aushebevorrichtung (22, 23), welche an einer Seite der Lagerungsebene (18) angeordnet ist und mittels derer eines der voneinander zu trennenden Werkstückteile als Entnahmeteil (14) senkrecht zu der Lagerungsebene (18) in einer Ausheberichtung (48) beaufschlagbar ist sowie
• mit einem Gegenhalter (24, 25), welcher an einer der Seite der Aushebevorrichtung (22, 23) gegenüberliegenden Seite der Lagerungsebene (18) angeordnet und zur in der Ausheberichtung (48) wirksamen Abstützung des durch die Aushebevorrichtung (22, 23) beaufschlagten Entnahmeteils (14) vorgesehen ist und welcher in einen Fixierungszustand und in einen Freigabezustand überführbar ist,
wobei das einerseits durch die Aushebevorrichtung (22, 23) beaufschlagte und andererseits durch den Gegenhalter (24, 25) abgestützte Entnahmeteil (14) bei Fixierungszustand des Gegenhalters (24, 25) an diesem fixiert und bei Freigabezustand des Gegenhalters (24, 25) von diesem gelöst ist und mittels der Aushebevorrichtung (22, 23) senkrecht zu der Lagerungsebene (18) relativ zu dem als Restteil (15) vorgesehenen anderen Werkstückteil mit einer Entnahmebewegung in der Ausheberichtung (48) bewegbar und dadurch von dem Restteil (15) trennbar ist,
**dadurch gekennzeichnet, dass**
der Gegenhalter (24, 25) wenigstens im Freigabezustand für das von der Aushebevorrichtung (22, 23) in der Ausheberichtung (48) beaufschlagte Entnahmeteil (14) eine in der Ausheberichtung (48) starre Anlage (37) ausbildet, welche das Entnahmeteil (14) während der Entnahmebewegung mit einer zu der Lagerungsebene (18) parallelen Ausrichtung abstützt.

2. Vorrichtung nach Anspruch 1, **dadurch gekennzeichnet, dass** der Gegenhalter (24, 25) zu Beginn der Entnahmebewegung in den Freigabezustand und nach wenigstens einem Teil der Entnahmebewegung in den Fixierungszustand überführbar ist und dass der Gegenhalter (24, 25) während der Entnahmebewegung im Freigabezustand und gegebenenfalls auch im Fixierungszustand die starre Anlage (37) für das Entnahmeteil (14) ausbildet.

3. Vorrichtung nach Anspruch 1 oder Anspruch 2, **dadurch gekennzeichnet, dass** die starre Anlage (37) für das Entnahmeteil (14) eine Halteeinrichtung (39a) ausbildet, die in einen dem Fixierungszustand des Gegenhalters (24, 25) zugeordneten Funktionszustand und in einen dem Freigabezustand des Gegenhalters (24, 25) zugeordneten Außerfunktionszustand überführbar ist, wobei das Entnahmeteil (14) bei Funktionszustand der Halteeinrichtung (39a) mittels dieser an dem Gegenhalter (24, 25) fixierbar und bei Außerfunktionszustand der Halteeinrichtung (39a) von dem Gegenhalter (24, 25) gelöst ist.

4. Vorrichtung nach Anspruch 1 oder Anspruch 2, **dadurch gekennzeichnet, dass** der Gegenhalter (24, 25) zusätzlich zu der starren Anlage (37) für das Entnahmeteil (14) eine Halteeinrichtung (39) aufweist, die in einen dem Fixierungszustand des Gegenhalters (24, 25) zugeordneten Funktionszustand und in einen dem Freigabezustand des Gegenhalters (24, 25) zugeordneten Außerfunktionszustand überführbar ist, wobei das Entnahmeteil (14) bei Funktionszustand der Halteeinrichtung (39) mittels dieser an dem Gegenhalter (24, 25) fixierbar und bei Außerfunktionszustand der Halteeinrichtung (39) von dem Gegenhalter (24, 25) gelöst ist.

5. Vorrichtung nach Anspruch 4, **dadurch gekennzeichnet, dass** der Gegenhalter (24, 25) die starre Anlage (37) für das Entnahmeteil (14) durch einen in der Ausheberichtung (48) starren Stützkörper ausbildet und dass die Halteeinrichtung (39) des Gegenhalters (24, 25) relativ zu dem Stützkörper in der Ausheberichtung (48) und in Gegenrichtung der Ausheberichtung (48) beweglich ist.

6. Vorrichtung nach Anspruch 5, **dadurch gekennzeichnet, dass** der Stützkörper durch eine Relativbewegung des Stützkörpers und der Halteeinrichtung (39) gegenüber der Halteeinrichtung (39) in eine Position bewegbar ist, in welcher der Stützkörper gegenüber der Halteeinrichtung (39) in Gegenrichtung der Ausheberichtung (48) versetzt ist.

7. Vorrichtung nach einem der vorhergehenden Ansprüche, **dadurch gekennzeichnet, dass** die von dem Gegenhalter (24, 25) ausgebildete starre Anlage (37) für das Entnahmeteil (14) eine Mehrzahl von Anlagestellen aufweist, die parallel zu der Lagerungsebene (18) voneinander beabstandet sind und an welchen die starre Anlage (37) das Entnahmeteil (14) während der Entnahmebewegung mit einer zu der Lagerungsebene (18) parallelen Ausrichtung in der Ausheberichtung (48) abstützt.

8. Vorrichtung nach einem der vorhergehenden Ansprüche, **dadurch gekennzeichnet, dass** eine Bewegungseinheit (26) vorgesehen ist, mittels derer die Aushebevorrichtung (22, 23) und das von dem Restteil (15) zu trennende Entnahmeteil (14) mit einer Stellbewegung relativ zueinander in eine Aushebeposition zustellbar sind, in welcher das von dem Restteil (15) zu trennende Entnahmeteil (14) durch die Aushebevorrichtung (22, 23) in der Ausheberichtung (48) beaufschlagbar und mit der Entnahmebewegung mit einer zu der Lagerungsebene (18) parallelen Ausrichtung in der Ausheberichtung (48) bewegbar ist.

9. Vorrichtung nach Anspruch 8, **dadurch gekennzeichnet, dass** die Bewegungseinheit (26) eine Bewegungssteuerung (35) aufweist, mittels derer die durch die Bewegungseinheit (26) bewirkte Stellbewegung in Abhängigkeit von der Beschaffenheit des Entnahmeteils (14) steuerbar ist.

10. Vorrichtung nach einem der vorhergehenden Ansprüche, **dadurch gekennzeichnet, dass** die Aushebevorrichtung (22, 23) eine Stellvorrichtung aufweist, mittels derer eine Kraft einstellbar ist, mit welcher die Aushebevorrichtung (22, 23) das Entnahmeteil (14) in der Ausheberichtung (48) beaufschlagt.

11. Vorrichtung nach einem der vorhergehenden Ansprüche, **dadurch gekennzeichnet, dass** die Aushebevorrichtung (22, 23) wenigstens eine gesteuert betätigbare Aushebeeinrichtung (47) aufweist und dass das Entnahmeteil (14) mittels der betätigten Aushebeeinrichtung (47) beaufschlagbar und mit der Entnahmebewegung mit einer zu der Lagerungsebene (18) parallelen Ausrichtung in der Ausheberichtung (48) bewegbar ist.

12. Vorrichtung nach Anspruch 11, **dadurch gekennzeichnet, dass** als Aushebeeinrichtung (47) ein Aushebestift vorgesehen ist.

13. Vorrichtung nach Anspruch 11 oder Anspruch 12, **dadurch gekennzeichnet, dass** die Aushebevorrichtung (22, 23) eine Mehrzahl von Aushebeeinrichtungen (47) umfasst, die unabhängig voneinander gesteuert betätigbar sind.

14. Vorrichtung nach Anspruch 13, **dadurch gekennzeichnet, dass** die Aushebeeinrichtungen (47) die Werkstücklagerung ausbilden.

15. Vorrichtung nach einem der vorhergehenden Ansprüche, **dadurch gekennzeichnet, dass** die Werkstücklagerung (17) eine plattenartige Werkstückauflage aufweist mit einer Platten-Hauptebene, die parallel zu der Lagerungsebene (18) verläuft und dass die Aushebevorrichtung (22, 23) an einer Seite der plattenartigen Werkstückauflage und der Gegenhalter (24, 25) an einer der Seite der Aushebevorrichtung (22, 23) gegenüberliegenden Seite der plattenartigen Werkstückauflage angeordnet sind und dass die plattenartige Werkstückauflage wenigstens eine Durchtrittsöffnung (19) aufweist, durch welche hindurch das Entnahmeteil (14) mittels der Aushebevorrichtung (22, 23) in der Ausheberichtung (48) beaufschlagbar ist.

16. Vorrichtung nach Anspruch 15, **dadurch gekennzeichnet, dass** eine Stellvorrichtung (10, 10a) vorgesehen ist, mittels derer die voneinander zu trennenden Werkstückteile einerseits und die plattenartige Werkstückauflage andererseits relativ zueinander parallel zu der Platten-Hauptebene positionierbar sind.

17. Maschinelle Anordnung
• mit einer Bearbeitungseinrichtung (3) zum trennenden Bearbeiten von plattenartigen Werkstücken, insbesondere von Blechen (2), mittels derer aus einem plattenartigen Werkstück zwei Werkstückteile erzeugbar sind sowie
• mit einer Vorrichtung (16, 56, 66) zum gegenseitigen Trennen der beiden Werkstückteile,
**dadurch gekennzeichnet, dass**
die Vorrichtung (16, 56, 66) zum gegenseitigen Trennen der beiden Werkstückteile nach einem der vorhergehenden Ansprüche ausgebildet ist.

18. Maschinelle Anordnung nach Anspruch 17, **dadurch gekennzeichnet, dass** eine gemeinsame Werkstücklagerung als Werkstücklagerung (17) der Vorrichtung (16, 56, 66) zum gegenseitigen Trennen der beiden Werkstückteile und als Werkstücklagerung der Bearbeitungseinrichtung (3) vorgesehen ist, wobei mittels der gemeinsamen Werkstücklagerung an der Bearbeitungseinrichtung (3) ein plattenartiges Werkstück während der Erzeugung der beiden Werkstückteile lagerbar ist.

19. Maschinelle Anordnung nach Anspruch 17 oder Anspruch 18, **dadurch gekennzeichnet,**
• **dass** die beiden Werkstückteile an der maschinellen Anordnung in einer Bearbeitungsposition und in einer Entladeposition anordenbar sind, wobei die beiden Werkstückteile in der Bearbeitungsposition mittels der Bearbeitungseinrichtung (3) zum trennenden Bearbeiten von plattenartigen Werkstücken erzeugbar und in der Entladeposition mittels der Vorrichtung (16, 56, 66) zum gegenseitigen Trennen der beiden Werkstückteile voneinander trennbar sind und
• **dass** der Gegenhalter (24, 25) der Vorrichtung (16, 56, 66) zum gegenseitigen Trennen der beiden Werkstückteile in die Bearbeitungsposition und in die Entladeposition wenigstens eines der beiden Werkstückteile bewegbar ist.

20. Maschinelle Anordnung nach Anspruch 19, **dadurch gekennzeichnet, dass** die beiden Werkstückteile bei ihrer Erzeugung mittels der Bearbeitungseinrichtung (3) zum trennenden Bearbeiten von plattenartigen Werkstücken mittels des in die Bearbeitungsposition wenigstens eines der beiden Werkstückteile bewegten Gegenhalters (24, 25) der Vorrichtung (16, 56, 66) zum gegenseitigen Trennen der beiden Werkstückteile relativ zueinander mit einer Solllage positionierbar sind.

21. Maschinelle Anordnung nach Anspruch 19 oder Anspruch 20, **dadurch gekennzeichnet, dass** eine Werkstücktransfervorrichtung (10, 31) vorgesehen ist, mittels derer die beiden Werkstückteile nach ihrer Erzeugung gemeinsam aus der jeweiligen Bearbeitungsposition in die jeweilige Entladeposition bewegbar sind und dass die beiden Werkstückteile bei der gemeinsamen Bewegung aus der jeweiligen Bearbeitungsposition in die jeweilige Entladeposition mittels des mitbewegten Gegenhalters (24, 25) der Vorrichtung (16, 56, 66) zum gegenseitigen Trennen der beiden Werkstückteile relativ zueinander mit einer Solllage positionierbar sind.

22. Maschinelle Anordnung nach Anspruch 20 oder Anspruch 21, **dadurch gekennzeichnet, dass** die beiden Werkstückteile mittels des in den Fixierungszustand überführten Gegenhalters (24, 25) der Vorrichtung (16, 56, 66) zum gegenseitigen Trennen der beiden Werkstückteile relativ zueinander mit einer Solllage positionierbar sind.

23. Verfahren zum gegenseitigen Trennen zweier Werkstückteile eines plattenartigen Werkstücks, insbesondere eines Blechs (2),
• wobei die beiden voneinander zu trennenden Werkstückteile mittels einer Werkstücklagerung (17) mit gegenseitiger Überdeckung senkrecht zu einer von der Werkstücklagerung (17) definierten Lagerungsebene (18) gelagert werden,
• wobei eines der voneinander zu trennenden Werkstückteile als Entnahmeteil (14) vorgesehen ist und durch eine Aushebevorrichtung (22, 23), welche an einer Seite der Lagerungsebene (18) angeordnet ist, senkrecht zu der Lagerungsebene (18) in einer Ausheberichtung (48) beaufschlagt wird,
• wobei das durch die Aushebevorrichtung (22, 23) in der Ausheberichtung (48) beaufschlagte Entnahmeteil (14) durch einen in einen Fixierungszustand und in einen Freigabezustand überführbaren Gegenhalter (24, 25) in der Ausheberichtung (48) abgestützt wird, welcher an einer der Seite der Aushebevorrichtung (22, 23) gegenüberliegenden Seite der Lagerungsebene (18) angeordnet ist, und
• wobei das einerseits durch die Aushebevorrichtung (22, 23) beaufschlagte und andererseits durch den Gegenhalter (24, 25) abgestützte Entnahmeteil (14) durch die Aushebevorrichtung (22, 23) senkrecht zu der Lagerungsebene (18) relativ zu dem als Restteil (15) vorgesehenen anderen Werkstückteil mit einer Entnahmebewegung in der Ausheberichtung (48) bewegt und dadurch von dem Restteil (15) getrennt wird und bei Fixierungszustand des Gegenhalters (24, 25) von diesem fixiert wird und bei Freigabezustand des Gegenhalters (24, 25) von diesem gelöst ist,
**dadurch gekennzeichnet, dass**
das von der Aushebevorrichtung (22, 23) in der Ausheberichtung (48) beaufschlagte Entnahmeteil (14) wenigstens bei Freigabezustand des Gegenhalters (24, 25) durch den Gegenhalter (24, 25) in der Ausheberichtung (48) mit einer zu der Lagerungsebene (18) parallelen Ausrichtung starr abgestützt wird.

24. Verfahren nach Anspruch 23, **dadurch gekennzeichnet, dass** der Gegenhalter (24, 25) vor Beginn der Entnahmebewegung in den Freigabezustand und nach wenigstens einem Teil der Entnahmebewegung in den Fixierungszustand überführt wird und dass das Entnahmeteil (14) während der Entnahmebewegung durch den in den Freigabezustand überführten Gegenhalter (24, 25) und gegebenenfalls auch durch den in den Fixierungszustand überführten Gegenhalter (24, 25) in der Ausheberichtung (48) mit einer zu der Lagerungsebene (18) parallelen Ausrichtung starr abgestützt wird.

25. Maschinelles Fertigungsverfahren, im Rahmen dessen mittels einer maschinellen Anordnung (1)
• aus einem plattenartigen Werkstück, insbesondere aus einem Blech (2), durch trennende Werkstückbearbeitung zwei Werkstückteile erzeugt werden und
• die beiden Werkstückteile nach der Erzeugung voneinander getrennt werden,
**dadurch gekennzeichnet, dass**
die beiden Werkstückteile nach dem Verfahren gemäß einem der Ansprüche 23, 24 voneinander getrennt werden.

26. Maschinelles Fertigungsverfahren nach Anspruch 25, **dadurch gekennzeichnet, dass** die beiden Werkstückteile in einer Bearbeitungsposition erzeugt und in einer Entladeposition voneinander getrennt werden und dass der Gegenhalter (24, 25) in die Bearbeitungsposition und in die Entladeposition wenigstens eines der beiden Werkstückteilen bewegt wird.

27. Maschinelles Fertigungsverfahren nach Anspruch 26, **dadurch gekennzeichnet, dass** die beiden Werkstückteile bei ihrer Erzeugung mittels des in die Bearbeitungsposition wenigstens eines der beiden Werkstückteile bewegten Gegenhalters (24, 25) relativ zueinander mit einer Solllage positioniert werden.

28. Maschinelles Fertigungsverfahren nach Anspruch 26 oder Anspruch 27, **dadurch gekennzeichnet, dass** die beiden Werkstückteile nach ihrer Erzeugung gemeinsam aus der jeweiligen Bearbeitungsposition in die jeweilige Entladeposition bewegt werden und dass die beiden Werkstückteile bei der gemeinsamen Bewegung aus der jeweiligen Bearbeitungsposition in die jeweilige Entladeposition mittels des mitbewegten Gegenhalters (24, 25) relativ zueinander mit einer Solllage positioniert werden.

29. Maschinelles Fertigungsverfahren nach Anspruch 27 oder Anspruch 28, **dadurch gekennzeichnet, dass** die beiden Werkstückteilen mittels des in den Fixierungszustand überführten Gegenhalters (24, 25) relativ zueinander mit einer Solllage positioniert werden.

## Claims

1. Apparatus for mutual separation of two workpiece components of a plate-like workpiece, in particular a metal sheet (2), comprising:
- a workpiece support (17) that defines a support plane (18) and, when supporting the two workpiece components intended to be separated from each other, supports said components that mutually overlap perpendicularly to the support plane (18);
- a lifting apparatus (22, 23) which is arranged at one side of the support plane (18) and by means of which one of the workpiece components intended to be separated from each other can be acted upon perpendicularly to the support plane (18) in a lifting direction (48) as a removal component (14), and
- a counter-holder (24, 25) which is arranged at a side of the support plane (18) opposite the side of the lifting apparatus (22, 23) to provide effective support in the lifting direction (48) for the removal component (14) that is acted on by the lifting apparatus (22, 23), and which can be transferred into a fixing state and into a releasing state, the removal component (14) acted on by the lifting apparatus (22, 23) at one side and supported by the counter-holder (24, 25) at the other side being fixed to the counter-holder (24, 25) in the fixing state thereof and being released from the counter-holder (24, 25) in the releasing state thereof and it being possible for said removal component to be moved, by means of the lifting apparatus (22, 23), perpendicularly to the support plane (18) relative to the other workpiece component provided as a remaining component (15) by means of a removal movement in the lifting direction (48) and to thereby be separated from the remaining component (15),
**characterised in that** the counter-holder (24, 25), at least in the releasing state, forms an abutment (37) for the removal component (14) acted on by the lifting apparatus (22, 23) in the lifting direction (48), which abutment is rigid in the lifting direction (48) and supports the removal component (14) during the removal movement with an orientation of the removal component (14) parallel to the support plane (18).

2. Apparatus according to claim 1, **characterised in that** the counter-holder (24, 25) can be transferred into the releasing state at the beginning of the removal movement and into the fixing state after the removal movement is at least partially completed, and **in that** the counter-holder (24, 25) forms the rigid abutment (37) for the removal component (14) during the removal movement, in the releasing state and optionally also in the fixing state.

3. Apparatus according to either claim 1 or claim 2, **characterised in that** the rigid abutment (37) for the removal component (14) forms a retention device (39a) that can be transferred into an operational state associated with the fixing state of the counter-holder (24, 25) and into a non-operational state associated with the releasing state of the counter-holder (24, 25), it being possible for the removal component (14) in the operational state of the retention device (39a) to be fixed thereby to the counter-holder (24, 25) and said removal component being released from the counter-holder (24, 25) in the non-operational state of the retention device (39a).

4. Apparatus according to either claim 1 or claim 2, **characterised in that** the counter-holder (24, 25) comprises, in addition to the rigid abutment (37) for the removal component (14), a retention device (39) that can be transferred into an operational state associated with the fixing state of the counter-holder (24, 25) and into a non-operational state associated with the releasing state of the counter-holder (24, 25), it being possible for the removal component (14) in the operational state of the retention device (39) to be fixed thereby to the counter-holder (24, 25) and said removal component being released from the counter-holder (24, 25) in the non-operational state of the retention device (39).

5. Apparatus according to claim 4, **characterised in that** the counter-holder (24, 25) forms the rigid abutment (37) for the removal component (14) by means of a support body that is rigid in the lifting direction (48), and **in that** the retention device (39) of the counter-holder (24, 25) can be moved relative to the support body in the lifting direction (48) and in a direction opposite the lifting direction (48).

6. Apparatus according to claim 5, **characterised in that** the support body can be moved by a relative movement of the support body and of the retention device (39) into a position relative to the retention device (39) in which position the support body is offset with respect to the retention device (39) in the direction opposite the lifting direction (48).

7. Apparatus according to any one of the preceding claims, **characterised in that** the rigid abutment (37) formed by the counter-holder (24, 25) for the removal component (14) has a plurality of abutment points spaced apart from one another in parallel with the support plane (18) and at which the rigid abutment (37), during the removal movement, supports the removal component (14) in the lifting direction (48) with an orientation of the removal component (14) parallel to the support plane (18).

8. Apparatus according to any one of the preceding claims, **characterised in that** a movement unit (26) is provided by means of which the lifting apparatus (22, 23) and the removal component (14) that is intended to be separated from the remaining component (15) can be positioned by means of a positioning movement relative to each other into a lifting position in which the removal component (14) that is intended to be separated from the remaining component (15) can be acted on by the lifting apparatus (22, 23) in the lifting direction (48) and can be moved by means of the removal movement in the lifting direction (48) with an orientation of the removal component (14) parallel to the support plane (18).

9. Apparatus according to claim 8, **characterised in that** the movement unit (26) comprises a movement control system (35) by means of which the positioning movement brought about by the movement unit (26) can be controlled according to the properties of the removal component (14).

10. Apparatus according to any one of the preceding claims, **characterised in that** the lifting apparatus (22, 23) comprises an adjusting apparatus by means of which a force at which the lifting apparatus (22, 23) acts on the removal component (14) in the lifting direction (48) can be adjusted.

11. Apparatus according to any one of the preceding claims, **characterised in that** the lifting apparatus (22, 23) comprises at least one lifting device (47) that can be actuated in a controlled manner, and **in that** the removal component (14) can by acted on by means of the actuated lifting device (47) and can be moved by means of the removal movement in the lifting direction (48) with an orientation of the removal component (14) parallel to the support plane (18).

12. Apparatus according to claim 11, **characterised in that** a lifting pin is provided as the lifting device (47).

13. Apparatus according to either claim 11 or claim 12, **characterised in that** the lifting apparatus (22, 23) comprises a plurality of lifting devices (47) that can be actuated in a controlled manner independently of one another.

14. Apparatus according to claim 13, **characterised in that** the lifting devices (47) form the workpiece support.

15. Apparatus according to any one of the preceding claims, **characterised in that** the workpiece support (17) comprises a plate-like workpiece support unit that has a main plate plane that extends in parallel with the support plane (18), and **in that** the lifting apparatus (22, 23) is arranged at one side of the plate-like workpiece support unit and the counter-holder (24, 25) is arranged at a side of the plate-like workpiece support unit opposite the side of the lifting apparatus (22, 23), and **in that** the plate-like workpiece support unit has at least one through-opening (19) through which the removal component (14) can be acted on in the lifting direction (48) by means of the lifting apparatus (22, 23).

16. Apparatus according to claim 15, **characterised in that** an adjusting apparatus (10, 10a) is provided by means of which the workpiece components that are intended to be separated from each other on the one hand and the plate-like workpiece support unit on the other can be positioned relative to one another in parallel with the main plate plane.

17. Mechanical arrangement comprising:
- a machining device (3) for separatively machining plate-like workpieces, in particular metal sheets (2), by means of which two workpiece components can be produced from a plate-like workpiece, and
- an apparatus (16, 56, 66) for mutual separation of the two workpiece components,
**characterised in that** the apparatus (16, 56, 66) for mutual separation of the two workpiece components is designed according to any one of the preceding claims.

18. Mechanical arrangement according to claim 17, **characterised in that** a common workpiece support is provided as the workpiece support (17) of the apparatus (16, 56, 66) for mutual separation of the two workpiece components and as a workpiece support of the machining device (3), it being possible to support a plate-like workpiece on the machining device (3) by means of said common workpiece support during the production of the two workpiece components.

19. Mechanical arrangement according to either claim 17 or claim 18, **characterised in that**
- the two workpiece components on the mechanical arrangement can be arranged in a machining position and in an unloading position, it being possible to produce the two workpiece components in the machining position by means of the machining device (3) for separatively machining plate-like workpieces and to separate said two workpiece components from each other in the unloading position by means of the apparatus (16, 56, 66) for mutual separation of the two workpiece components, and
- the counter-holder (24, 25) of the apparatus (16, 56, 66) for mutual separation of the two workpiece components can be moved into the machining position and into the unloading position of at least one of the two workpiece components.

20. Mechanical arrangement according to claim 19, **characterised in that** the two workpiece components, when they are produced by means of the machining device (3) for separatively machining plate-like workpieces, can be positioned in a desired position relative to each other by means of the counter-holder (24, 25) of the apparatus (16, 56, 66) for mutual separation of the two workpiece components, which counter-holder has been moved into the machining position of at least one of the two workpiece components.

21. Mechanical arrangement according to either claim 19 or claim 20, **characterised in that** a workpiece transfer apparatus (10, 31) is provided by means of which the two workpiece components, after they have been produced, can be moved together from the respective machining position into the respective unloading position, and **in that** the two workpiece components, during the joint movement from the respective machining position into the respective unloading position, can be positioned in a desired position relative to each other by means of the counter-holder (24, 25) of the apparatus (16, 56, 66) for mutual separation of the two workpiece components, which counter-holder is moved together with said two workpiece components.

22. Mechanical arrangement according to either claim 20 or claim 21, **characterised in that** the two workpiece components can be positioned in a desired position relative to each other by means of the counter-holder (24, 25) of the apparatus (16, 56, 66) for mutual separation of the two workpiece components, which counter-holder has been transferred into the fixing state.

23. Method for mutual separation of two workpiece components of a plate-like workpiece, in particular a metal sheet (2),
- the two workpiece components that are intended to be separated from each other being supported by means of a workpiece support (17) and mutually overlapping perpendicularly to a support plane (18) defined by the workpiece support (17);
- one of the workpiece components which are intended to be separated from each other being provided as a removal component (14) and being acted on by a lifting apparatus (22, 23) in a lifting direction (48) perpendicularly to the support plane (18), which lifting apparatus is arranged at one side of the support plane (18);
- the removal component (14) acted on by the lifting apparatus (22, 23) in the lifting direction (48) being supported in the lifting direction (48) by a counter-holder (24, 25) that can be transferred into a fixing state and into a releasing state and that is arranged at a side of the support plane (18) opposite the side of the lifting apparatus (22, 23); and
- the removal component (14) which is acted on by the lifting apparatus (22, 23) at the one side and supported by the counter-holder (24, 25) at the other side being moved, by means of the lifting apparatus (22, 23), perpendicularly to the support plane (18) relative to the other workpiece component provided as the remaining component (15) by means of a removal movement in the lifting direction (48) and thereby being separated from the remaining component (15) and being fixed by the counter-holder (24, 25) in the fixing state thereof and being released from the counter-holder (24, 25) in the releasing state thereof,
**characterised in that**
the removal component (14) acted on by the lifting apparatus (22, 23) in the lifting direction (48) is supported in a rigid manner by the counter-holder (24, 25) in the lifting direction (48) with an orientation of the removal component (14) parallel to the support plane (18), at least in the releasing state of the counter-holder (24, 25).

24. Method according to claim 23, **characterised in that** the counter-holder (24, 25) is transferred into the releasing state before the beginning of the removal movement and into the fixing state after the removal movement is at least partially completed, and **in that** the removal component (14) is, during the removal movement, rigidly supported in the lifting direction (48) with an orientation of the removal component (14) parallel to the support plane (18) by means of the counter-holder (24, 25) that has been transferred into the releasing state and optionally also by means of the counter-holder (24, 25) that has been transferred into the fixing state.

25. Mechanical manufacturing method, within the scope of which and by means of a mechanical arrangement (1):
- two workpiece components are produced from a plate-like workpiece, in particular a metal sheet (2), by a separative workpiece machining operation; and
- the two workpiece components are separated from each other after the production thereof,
**characterised in that** the two workpiece components are separated from each other in accordance with the method according to either claim 23 or claim 24.

26. Mechanical manufacturing method according to claim 25, **characterised in that** the two workpiece components are produced in a machining position and separated from each other in an unloading position, and **in that** the counter-holder (24, 25) is moved into the machining position and into the unloading position of at least one of the two workpiece components.

27. Mechanical manufacturing method according to claim 26, **characterised in that** the two workpiece components, during the production thereof, are positioned in a desired position relative to each other by means of the counter-holder (24, 25) that has been moved into the machining position of at least one of the two workpiece components.

28. Mechanical manufacturing method according to either claim 26 or claim 27, **characterised in that** the two workpiece components, after they have been produced, are moved together from the respective machining position into the respective unloading position, and **in that** the two workpiece components, when they are moved together from the respective machining position into the respective unloading position, are positioned in a desired position relative to each other by means of the counter-holder (24, 25) that is moved together with said two workpiece components.

29. Mechanical manufacturing method according to either claim 27 or claim 28, **characterised in that** the two workpiece components are positioned in a desired position relative to each other by means of the counter-holder (24, 25) that has been transferred into the fixing state.

## Revendications

1. Dispositif pour séparer l'une de l'autre deux parties d'une pièce en forme de plaque, en particulier d'une tôle (2),
- avec un support de pièce (17), qui définit un plan de support (18) et qui, lorsqu'il supporte les deux parties de pièce à séparer l'une de l'autre, les supporte avec un recouvrement mutuel perpendiculairement au plan de support (18),
- avec un dispositif de levage (22, 23), qui est disposé sur un côté du plan de support (18) et au moyen duquel une des parties de pièce à séparer l'une de l'autre peut, en tant que partie à retirer (14), être sollicitée dans une direction de levage (48) perpendiculairement au plan de support (18),
- et avec un contre-appui (24, 25), qui est disposé sur un côté du plan de support (18) opposé au côté du dispositif de levage (22, 23) et est prévu pour le soutien, actif dans la direction de levage (48), de la partie à retirer (14) sollicitée par le dispositif de levage (22, 23), et qui peut être transféré dans un état de fixation et dans un état de détachement,
sachant que la partie à retirer (14), d'une part sollicitée par le dispositif de levage (22, 23) et d'autre part soutenue par le contre-appui (24, 25), est fixée au contre-appui (24, 25) dans l'état de fixation de ce dernier et libérée du contre-appui (24, 25) dans l'état de détachement de ce dernier et peut, au moyen du dispositif de levage (22, 23), être déplacée avec un mouvement d'enlèvement dans la direction de levage (48) perpendiculairement au plan de support (18) par rapport à l'autre partie de pièce prévue comme partie restante (15), et ainsi séparée de la partie restante (15),
**caractérisé en ce que** le contre-appui (24, 25) forme au moins dans l'état de détachement un appui (37) rigide dans la direction de levage (48) pour la partie à retirer (14) sollicitée dans la direction de levage (48) par le dispositif de levage (22, 23), appui qui soutient la partie à retirer (14) pendant le mouvement d'enlèvement avec une orientation de la partie à retirer (14) parallèle au plan de support (18).

2. Dispositif selon la revendication 1, **caractérisé en ce que** le contre-appui (24, 25) peut être transféré au début du mouvement d'enlèvement dans l'état de détachement et après au moins une partie du mouvement d'enlèvement dans l'état de fixation, et **en ce que** le contre-appui (24, 25) forme pendant le mouvement d'enlèvement, dans l'état de détachement et éventuellement aussi dans l'état de fixation, l'appui rigide (37) pour la partie à retirer (14).

3. Dispositif selon la revendication 1 ou la revendication 2, **caractérisé en ce que** l'appui rigide (37) pour la partie à retirer (14) forme un organe de maintien (39a) qui peut être transféré dans un état de fonctionnement associé à l'état de fixation du contre-appui (24, 25) et dans un état de non-fonctionnement associé à l'état de détachement du contre-appui (24, 25), sachant que la partie à retirer (14) peut être fixée au contre-appui (24, 25) au moyen de l'organe de maintien (39a) dans l'état de fonctionnement de ce dernier, et est libéré du contre-appui (24, 25) dans l'état de non-fonctionnement de l'organe de maintien (39a).

4. Dispositif selon la revendication 1 ou la revendication 2, **caractérisé en ce que** le contre-appui (24, 25) présente en plus de l'appui rigide (37) pour la partie à retirer (14) un organe de maintien (39) qui peut être transféré dans un état de fonctionnement associé à l'état de fixation du contre-appui (24, 25) et dans un état de non-fonctionnement associé à l'état de détachement du contre-appui (24, 25), sachant que la partie à retirer (14) peut être fixée au contre-appui (24, 25) au moyen de l'organe de maintien (39) dans l'état de fonctionnement de ce dernier, et est libéré du contre-appui (24, 25) dans l'état de non-fonctionnement de l'organe de maintien (39).

5. Dispositif selon la revendication 4, **caractérisé en ce que** le contre-appui (24, 25) forme l'appui rigide (37) pour la partie à retirer (14) par un corps de soutien rigide dans la direction de levage (48), et **en ce que** l'organe de maintien (39) du contre-appui (24, 25) est mobile par rapport au corps de soutien dans la direction de levage (48) et en direction contraire à la direction de levage (48).

6. Dispositif selon la revendication 5, **caractérisé en ce que** le corps de soutien peut, par un mouvement relatif du corps de soutien et de l'organe de maintien (39), être déplacé par rapport à l'organe de maintien (39) dans une position dans laquelle le corps de soutien est décalé par rapport à l'organe de maintien (39) en direction contraire à la direction de levage (48).

7. Dispositif selon l'une des revendications précédentes, **caractérisé en ce que** l'appui rigide (37) formé pour la partie à retirer (14) par le contre-appui (24, 25) présente une pluralité de points d'appui qui sont distants les uns des autres parallèlement au plan de support (18) et au niveau desquels l'appui rigide (37) soutient la partie à retirer (14) dans la direction de levage (48) pendant le mouvement d'enlèvement avec une orientation de la partie à retirer (14) parallèle au plan de support (18).

8. Dispositif selon l'une des revendications précédentes, **caractérisé en ce qu'**il est prévu une unité de déplacement (26) au moyen de laquelle le dispositif de levage (22, 23) et la partie à retirer (14) à séparer de la partie restante (15) peuvent, par un mouvement d'ajustement, être positionnés l'un par rapport à l'autre dans une position de levage dans laquelle la partie à retirer (14) à séparer de la partie restante (15) peut être sollicitée par le dispositif de levage (22, 23) dans la direction de levage (48) et peut être déplacée dans la direction de levage (48) par le mouvement d'enlèvement avec une orientation de la partie à retirer (14) parallèle au plan de support (18).

9. Dispositif selon la revendication 8, **caractérisé en ce que** l'unité de déplacement (26) présente une commande de déplacement (35) au moyen de laquelle le mouvement d'ajustement produit par l'unité de déplacement (26) peut être commandé en fonction des caractéristiques de la partie à retirer (14).

10. Dispositif selon l'une des revendications précédentes, **caractérisé en ce que** le dispositif de levage (22, 23) présente un dispositif d'ajustement au moyen duquel peut être réglée une force par laquelle le dispositif de levage (22, 23) sollicite la partie à retirer (14) dans la direction de levage (48).

11. Dispositif selon l'une des revendications précédentes, **caractérisé en ce que** le dispositif de levage (22, 23) présente au moins un organe de levage (47) pouvant être actionné de manière commandée, et **en ce que** la partie à retirer (14) peut être sollicitée au moyen de l'organe de levage actionné (47) et déplacée dans la direction de levage (48) par le mouvement d'enlèvement avec une orientation parallèle de la partie à retirer (14) au plan de support (18).

12. Dispositif selon la revendication 11, **caractérisé en ce qu'**une broche de levage est prévue comme organe de levage (47).

13. Dispositif selon la revendication 11 ou la revendication 12, **caractérisé en ce que** le dispositif de levage (22, 23) comprend une pluralité d'organes de levage (47) qui peuvent être actionnés en étant commandés indépendamment les uns des autres.

14. Dispositif selon la revendication 13, **caractérisé en ce que** les organes de levage (47) forment le support de pièce.

15. Dispositif selon l'une des revendications précédentes, **caractérisé en ce que** le support de pièce (17) présente un appui de pièce en forme de plaque avec un plan principal de plaque qui s'étend parallèlement au plan de support (18), et **en ce que** le dispositif de levage (22, 23) est disposé sur un côté de l'appui de pièce en forme de plaque et le contre-appui (24, 25) sur un côté de l'appui de pièce en forme de plaque opposé au côté du dispositif de levage (22, 23), et **en ce que** l'appui de pièce en forme de plaque présente au moins une ouverture de passage (19) à travers laquelle la partie à retirer (14) peut être sollicitée dans la direction de levage (48) au moyen du dispositif de levage (22, 23).

16. Dispositif selon la revendication 15, **caractérisé en ce qu'**il est prévu un dispositif d'ajustement (10, 10a) au moyen duquel les parties de pièce à séparer l'une de l'autre d'une part et l'appui de pièce en forme de plaque d'autre part peuvent être positionnés les uns par rapport aux autres parallèlement au plan principal de la plaque.

17. Système mécanique
- avec un équipement d'usinage (3) pour l'usinage de séparation de pièces en forme de plaques, en particulier de tôles (2), au moyen duquel deux parties de pièce peuvent être produites à partir d'une pièce en forme de plaque, et
- avec un dispositif (16, 56, 66) pour séparer l'une de l'autre les deux parties de pièce,
**caractérisé en ce que** le dispositif (16, 56, 66) pour séparer l'une de l'autre les deux parties de pièce est configuré selon l'une des revendications précédentes.

18. Système mécanique selon la revendication 17, **caractérisé en ce qu'**un support de pièce commun est prévu comme support de pièce (17) du dispositif (16, 56, 66) pour séparer l'une de l'autre les deux parties de pièce et comme support de pièce de l'équipement d'usinage (3), sachant qu'au moyen du support de pièce commun, une pièce en forme de plaque peut être supportée sur l'équipement d'usinage (3) pendant la production des deux parties de pièce.

19. Système mécanique selon la revendication 17 ou la revendication 18, **caractérisé**
- **en ce que** les deux parties de pièce peuvent être disposées sur le système mécanique dans une position d'usinage et dans une position de déchargement, sachant que les deux parties de pièce peuvent être produites dans la position d'usinage au moyen de l'équipement d'usinage (3) pour l'usinage de séparation de pièces en forme de plaques, et peuvent être séparées l'une de l'autre dans la position de déchargement au moyen du dispositif (16, 56, 66) pour séparer l'une de l'autre les deux parties de pièce,
- et **en ce que** le contre-appui (24, 25) du dispositif (16, 56, 66) pour séparer l'une de l'autre les deux parties de pièce peut être déplacé dans la position d'usinage et dans la position de déchargement d'au moins une des deux parties de pièce.

20. Système mécanique selon la revendication 19, **caractérisé en ce que** les deux parties de pièce peuvent, lors de leur production au moyen de l'équipement d'usinage (3) pour l'usinage de séparation de pièces en forme de plaques, être positionnées l'une par rapport à l'autre avec une position de consigne au moyen du contre-appui (24, 25), déplacé dans la position d'usinage d'au moins une des deux parties de pièce, du dispositif (16, 56, 66) pour séparer l'une de l'autre les deux parties de pièce.

21. Système mécanique selon la revendication 19 ou la revendication 20, **caractérisé en ce qu'**il est prévu un dispositif (10, 31) de transfert de pièce au moyen duquel les deux parties de pièce peuvent, à la suite de leur production, être déplacées conjointement de la position d'usinage respective dans la position de déchargement respective, et **en ce que** les deux parties de pièce, lors du déplacement commun de la position d'usinage respective dans la position de déchargement respective, peuvent être positionnées l'une par rapport à l'autre avec une position de consigne au moyen du contre-appui conjointement déplacé (24, 25) du dispositif (16, 56, 66) pour séparer l'une de l'autre les deux parties de pièce.

22. Système mécanique selon la revendication 20 ou la revendication 21, **caractérisé en ce que** les deux parties de pièce peuvent être positionnées l'une par rapport à l'autre avec une position de consigne au moyen du contre-appui (24, 25) transféré dans l'état de fixation du dispositif (16, 56, 66) pour séparer l'une de l'autre les deux parties de pièce.

23. Procédé pour séparer l'une de l'autre deux parties d'une pièce en forme de plaque, en particulier d'une tôle (2),
- sachant que les deux parties de pièce à séparer l'une de l'autre sont, au moyen d'un support de pièce (17), supportées avec un recouvrement mutuel perpendiculairement à un plan de support (18) défini par le support de pièce (17),
- sachant qu'une des deux parties de pièce à séparer l'une de l'autre est prévue comme partie à retirer (14) et est sollicitée, par un dispositif de levage (22, 23) qui est disposé sur un côté du plan de support (18), perpendiculairement au plan de support (18) dans une direction de levage (48),
- sachant que la partie à retirer (14) sollicitée par le dispositif de levage (22, 23) dans la direction de levage (48) est soutenue dans la direction de levage (48) par un contre-appui (24, 25) pouvant être transféré dans un état de fixation et dans un état de détachement, contre-appui qui est disposé sur un côté du plan de support (18) opposé au côté du dispositif de levage (22, 23), et
- sachant que la partie à retirer (14), d'une part sollicitée par le dispositif de levage (22, 23) et d'autre part soutenue par le contre-appui (24, 25), est, par le dispositif de levage (22, 23), déplacée avec un mouvement d'enlèvement dans la direction de levage (48) perpendiculairement au plan de support (18) par rapport à l'autre partie de pièce prévue comme partie restante (15), et ainsi séparée de la partie restante (15), et est fixée par le contre-appui (24, 25) dans l'état de fixation de ce dernier et libérée du contre-appui (24, 25) dans l'état de détachement de ce dernier,
**caractérisé en ce que** la partie à retirer (14) sollicitée dans la direction de levage (48) par le dispositif de levage (22, 23) est, au moins dans l'état de détachement du contre-appui (24, 25), soutenue rigidement par le contre-appui (24, 25) dans la direction de levage (48) avec une orientation de la partie à retirer (14) parallèle au plan de support (18).

24. Procédé selon la revendication 23, **caractérisé en ce que** le contre-appui (24, 25) est transféré au début du mouvement d'enlèvement dans l'état de détachement et après au moins une partie du mouvement d'enlèvement dans l'état de fixation, et **en ce que** la partie à retirer (14) est, pendant le mouvement d'enlèvement, par le contre-appui (24, 25) transféré dans l'état de détachement et éventuellement aussi par le contre-appui (24, 25) transféré dans l'état de fixation, soutenue rigidement dans la direction de levage (48) avec une orientation de la partie à retirer (14) parallèle au plan de support (18).

25. Procédé de fabrication mécanique, dans le cadre duquel, au moyen d'un système mécanique (1),
- on produit à partir d'une pièce en forme de plaque, en particulier d'une tôle (2), deux parties de pièce par usinage de séparation de la pièce, et
- les deux parties de pièce sont, à la suite de leur production, séparées l'une de l'autre,
**caractérisé en ce que** les deux parties de pièce sont séparées l'une de l'autre suivant le procédé selon l'une des revendications 23, 24.

26. Procédé de fabrication mécanique selon la revendication 25, **caractérisé en ce que** les deux parties de pièce sont produites dans une position d'usinage et séparées l'une de l'autre dans une position de déchargement, et **en ce que** le contre-appui (24, 25) est déplacé dans la position d'usinage et dans la position de déchargement d'au moins une des deux parties de pièce.

27. Procédé de fabrication mécanique selon la revendication 26, **caractérisé en ce que** les deux parties de pièce sont, lors de leur production, positionnées l'une par rapport à l'autre avec une position de consigne au moyen du contre-appui (24, 25) déplacé dans la position d'usinage d'au moins une des deux parties de pièce.

28. Procédé de fabrication mécanique selon la revendication 26 ou la revendication 27, **caractérisé en ce que** les deux parties de pièce sont, à la suite de leur production, déplacées conjointement de la position d'usinage respective dans la position de déchargement respective, et **en ce que** les deux parties de pièce sont, lors du déplacement conjoint de la position d'usinage respective dans la position de déchargement respective, positionnées l'une par rapport à l'autre avec une position de consigne au moyen du contre-appui conjointement déplacé (24, 25).

29. Procédé de fabrication mécanique selon la revendication 27 ou la revendication 28, **caractérisé en ce que** les deux parties de pièce sont positionnées l'une par rapport à l'autre avec une position de consigne au moyen du contre-appui (24, 25) transféré dans l'état de fixation.
